# EUROPEAN PATENT APPLICATION

(11) **EP 4 804 717 A2**
(43) Date of publication of application: **09.09.2026**
(21) Application number: 26152332.8
(22) Date of filing: 16.01.2026
(51) Int. Cl.: H04W 76/30

(54) **RADIO-FREQUENCY EXPOSURE MANAGEMENT FOR MULTI-RADIO WIRELESS CIRCUITRY**

(30) Priority: 14.02.2025 US 202519054204
(71) Applicant: Apple Inc., Cupertino, CA 95014 (US)
(72) Inventor: FLYNN, Paul V., Cupertino, CA 95014 (US); MOAZ, Ali, Cupertino, CA 95014 (US); NICKISCH, Dirk, Cupertino, CA 95014 (US); O'SHEA, Helena D., Cupertino, CA 95014 (US); GAO, Jinling, Cupertino, CA 95014 (US); MONIN, Ofer, Cupertino, CA 95014 (US); MALIK, Rafia, Cupertino, CA 95014 (US); PALANISWAMY, Renukadevi, Cupertino, CA 95014 (US); FULANI, Sanil H., Cupertino, CA 95014 (US); NANDA, Satyajit, Cupertino, CA 95014 (US); KODALI, Sree Ram, Cupertino, CA 95014 (US)
(74) Representative: Karl, Christof

(57) **Abstract**

Wireless circuitry may include a radio-frequency exposure (RFE) manager, first and second radios, and storage. The storage may store CellON and TxSuspend bits indicative of a status of the first radio. The RFE manager may update RFE budgets for the radios and/or the second radio may update its RFE consumption based on the CellON and/or TxSuspend bits. A PHY of the first radio may set the CellON bit and the TxSuspend bit in the storage. When the first radio performs an operation that could cause rapid toggling of the CellON bit, a MAC of the first radio may cause the PHY to maintain the value of the CellON bit in the storage during the operation. The PHY may also flip the TxSuspend bit for a duration of the operation to inform the RFE manager the first radio is not actively transmitting, despite the CellON bit being consistent with signal transmission.

## Description

This application claims priority to U.S. patent application No. 19/054,204, filed February 14, 2025, which is hereby incorporated by reference herein in its entirety.

### Field

This disclosure relates generally to electronic devices, including electronic devices with wireless circuitry.

### Background

Electronic devices are often provided with wireless capabilities. An electronic device with wireless capabilities has wireless circuitry that includes one or more antennas. The antennas transmit radio-frequency signals. During transmission, the radio-frequency signals are sometimes incident upon nearby external objects such as the body of a user or another person.

Wireless circuitry is typically operated in geographic regions that impose regulatory limits on the amount of radio-frequency exposure produced by the wireless circuitry while transmitting radio-frequency signals. It can be challenging to design wireless circuitry that meets these regulatory limits while still exhibiting sufficient levels of performance.

### Summary

An electronic device may include wireless circuitry. The wireless circuitry may include a radio-frequency exposure (RFE) manager, a set of radios, and an always accessible memory region (AAMR). The RFE manager may periodically distribute RFE budgets to the radios. The radios may perform signal transmission pursuant to the RFE budgets. The radios may periodically transmit, to the RFE manager, RFE reports indicative of RFE consumption by the radios during signal transmission. The RFE manager may update the RFE budgets based on the RFE reports to ensure that the wireless circuitry complies with regulatory requirements on RFE.

The AAMR may store a CellON bit and a TxSuspend bit indicative of a status of the cellular radio. The RFE manager may update the RFE budgets and/or the non-cellular radio may update its own RFE consumption based on the CellON bit and/or the TxSuspend bit. The CellON bit has a first value during signal transmission by the cellular radio. The TxSuspend bit has a second value during signal transmission by the cellular radio. A physical layer (PHY) of the cellular radio may set and update the CellON bit and the TxSuspend bit in the AAMR. A medium access control (MAC) layer of the cellular radio performs radio resource control (RRC) operations for the cellular radio. The cellular radio may perform an operation that involves an RRC release and that could otherwise cause excessively fast toggling of the CellON bit. These types of operations may include inter-RAT redirection, mobility, or re-establishment operations, as examples. When this occurs, the MAC may transmit an indication to the PHY that causes the PHY to maintain the first value of the CellON bit in the AAMR despite the cellular radio performing an RRC release performed during the operation. In this way, the cellular radio may prevent rapid toggling of the CellON bit in a manner that may improve the wireless performance of the non-cellular radio without use of a hysteresis-based timer.

The cellular radio stops periodic transmission of RFE reports to the RFE manager during the operation. The PHY may switch the TxSuspend bit to a third value different than the second value for the duration of the operation. This may serve to inform the RFE manager that the absence of periodic RFE reports from the cellular radio is caused by the operation instead of a reporting error. In response to the CellON bit having the first value and the TxSuspend bit having the third value, the RFE manager may stop periodic transmission of RFE budgets to the cellular radio for a predetermined time period and/or may boost the RFE budget of the non-cellular radio for the predetermined time period. This may help to improve wireless performance of the non-cellular radio while the cellular radio performs the operation.

An aspect of the disclosure provides a method of operating wireless circuitry. The method can include transmitting, using a first radio, first radio-frequency signals based on a first radio-frequency exposure (RFE) budget while a first status flag associated with the first radio has a first value in storage circuitry. The method can include performing, using the first radio, an operation that includes a radio resource control (RRC) connection release. The method can include causing, using a medium access control (MAC) block of the first radio, a physical layer (PHY) block of the first radio to maintain the first value of the status flag in the storage circuitry for a duration of the operation. The method can include transmitting, using a second radio, second radio-frequency signals based on a second RFE budget and the first status flag in the storage circuitry.

An aspect of the disclosure provides wireless circuitry. The wireless circuitry can include a first radio configured to transmit first radio-frequency signals according to a first radio-frequency exposure (RFE) budget. The wireless circuitry can include a second radio configured to transmit second radio-frequency signals according to a second RFE budget. The wireless circuitry can include storage circuitry that stores a status flag indicative of whether the first radio has suspended radio-frequency transmission. The wireless circuitry can include one or more processors communicatively coupled to the first radio, the second radio, and the storage circuitry, wherein the one or more processors are configured to periodically transmit the first RFE budget to the first radio and the second RFE budget to the second radio, and update the second RFE budget in response to the status flag having a first value indicative of the first radio having suspended radio-frequency transmission.

An aspect of the disclosure provides wireless circuitry. The wireless circuitry can include one or more processors configured to generate a radio-frequency exposure (RFE) budget. The wireless circuitry can include a radio communicatively coupled to the one or more processors and configured to transmit radio-frequency signals according to the RFE budget. The wireless circuitry can include an always accessible memory region (AAMR) that stores a first bit and a second bit associated with a status of the radio, wherein the radio is configured to set the first bit to a first value and the second bit to a second value while the radio transmits the radio-frequency signals, the radio is configured switch the first value of the first bit in response to receipt of a connection release instruction from a wireless network, and the radio is configured switch the second value of the second bit in response to the radio performing an operation that involves a suspension of signal transmission while the first bit has the first value.

### Brief Description of the Drawings

FIG. 1 is a diagram of an illustrative electronic device having wireless circuitry in accordance with some embodiments.
FIG. 2 is a diagram of illustrative wireless circuitry in accordance with some embodiments.
FIG. 3 is a diagram of illustrative wireless circuitry that includes a radio-frequency exposure manager for managing radio-frequency exposure of a set of radios during signal transmission in accordance with some embodiments.
FIG. 4 is a table of illustrative cellular radio states that may be represented by a flag bit in accordance with some embodiments.
FIG. 5 is a flow chart of illustrative operations involved in performing radio-frequency signal transmission using wireless circuitry of the type shown in FIG. 3 in accordance with some embodiments.
FIG. 6 is a plot illustrating one example of how different radios may produce different amounts of radio-frequency exposure during signal transmission in accordance with some embodiments.
FIG. 7 is a flow chart of illustrative operations that may be performed by a cellular radio to inform other radios of its transmission status using a first flag bit in accordance with some embodiments.
FIG. 8 is a flow chart of illustrative operations that may be performed by wireless circuitry to inform a radio-frequency exposure manager of the transmission status of a cellular radio using first and second flag bits in accordance with some embodiments.
FIG. 9 is a timing diagram illustrating how first and second flag bits may be used by a cellular radio to inform a radio-frequency exposure manager of the transmission status of the cellular radio in accordance with some embodiments.

### Detailed Description

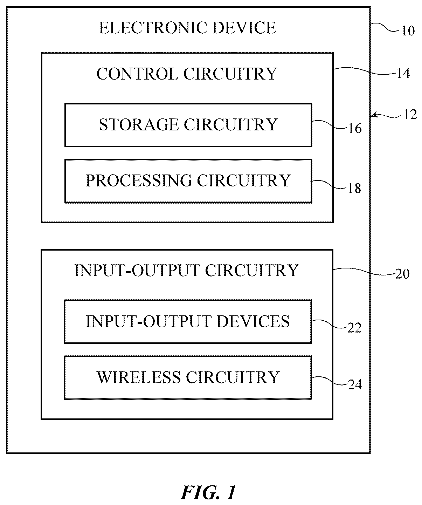

Electronic device 10 of FIG. 1 may be a computing device such as a laptop computer, a desktop computer, a computer monitor containing an embedded computer, a tablet computer, a cellular telephone, a media player, or other handheld or portable electronic device, a smaller device such as a wristwatch device, a pendant device, a headphone or earpiece device, a device embedded in eyeglasses, goggles, a helmet, or other equipment worn on a user's head (e.g., an augmented, virtual, or mixed reality head-mounted display device), or another wearable or miniature device, a television, a computer display (e.g., that does not contain an embedded computer), a gaming device, a navigation device, an embedded system such as a system in which electronic equipment with a display is mounted in a kiosk or automobile, a wireless internet-connected voice-controlled speaker, a home entertainment device, a remote control device, a gaming controller, a peripheral user input device, a wireless base station or access point, equipment that implements the functionality of two or more of these devices, or other electronic equipment.

As shown in the functional block diagram of FIG. 1, device 10 may include components located on or within an electronic device housing such as housing 12. Housing 12, which may sometimes be referred to as a case, may be formed from plastic, glass, ceramics, fiber composites, metal (e.g., stainless steel, aluminum, metal alloys, etc.), other suitable materials, or a combination of these materials. In some embodiments, parts or all of housing 12 may be formed from dielectric or other low-conductivity material (e.g., glass, ceramic, plastic, sapphire, etc.). In other embodiments, housing 12 or at least some of the structures that make up housing 12 may be formed from metal elements.

Device 10 may include control circuitry 14. Control circuitry 14 may include storage such as storage circuitry 16. Storage circuitry 16 may include hard disk drive storage, nonvolatile memory (e.g., flash memory or other electrically-programmable-read-only memory configured to form a solid-state drive), volatile memory (e.g., static or dynamic random-access-memory), etc. Storage circuitry 16 may include storage that is integrated within device 10 and/or removable storage media.

Control circuitry 14 may include processing circuitry such as processing circuitry 18. Processing circuitry 18 may be used to control the operation of device 10. Processing circuitry 18 may include on one or more processors such as microprocessors, microcontrollers, digital signal processors, host processors, baseband processor integrated circuits, application specific integrated circuits, central processing units (CPUs), graphics processing units (GPUs), etc. Control circuitry 14 may be configured to perform operations in device 10 using hardware (e.g., dedicated hardware or circuitry), firmware, and/or software. Software code for performing operations in device 10 may be stored on storage circuitry 16 (e.g., storage circuitry 16 may include non-transitory (tangible) computer readable storage media that stores the software code). The software code may sometimes be referred to as program instructions, software, data, instructions, or code. Software code stored on storage circuitry 16 may be executed by processing circuitry 18.

Control circuitry 14 may be used to run software on device 10 such as satellite navigation applications, internet browsing applications, voice-over-internet-protocol (VOIP) telephone call applications, email applications, media playback applications, operating system functions, etc. To support interactions with external equipment, control circuitry 14 may be used in implementing wireless communications protocols (sometimes also referred to as communications protocols or communications standards). Communications protocols (standards) that may be implemented using control circuitry 14 include wireless local area network (WLAN) protocols (e.g., IEEE 802.11 protocols - sometimes referred to as Wi-Fi^{®} such as a Wi-Fi 6 protocol, a Wi-Fi 7 protocol, or other Wi-Fi protocols), protocols for other short-range wireless communications links such as the Bluetooth^{®} protocol or other wireless personal area network (WPAN) protocols, IEEE 802.11ad protocols (e.g., ultra-wideband protocols), cellular telephone protocols (e.g., 3G protocols, 4G (LTE) protocols, 3GPP Fifth Generation (5G) New Radio (NR) protocols, Sixth Generation (6G) protocols, sub-THz protocols, THz protocols, etc.), satellite navigation system protocols (e.g., global positioning system (GPS) protocols, global navigation satellite system (GLONASS) protocols, etc.), satellite communications (satcom) protocols, antenna-based spatial ranging protocols, optical communications protocols, or any other desired communications protocols. Each communications protocol may be associated with a corresponding radio access technology (RAT) that specifies the physical connection methodology used in implementing the protocol (e.g., used in transmitting and/or receiving radio-frequency signals under or according to the protocol).

Device 10 may include input-output circuitry 20. Input-output circuitry 20 may include input-output devices 22. Input-output devices 22 may be used to allow data to be supplied to device 10 and to allow data to be provided from device 10 to external devices. Input-output devices 22 may include user interface devices, data port devices, and other input-output components. For example, input-output devices 22 may include touch sensors, displays (e.g., touch-sensitive and/or force-sensitive displays), light-emitting components such as displays without touch sensor capabilities, buttons (mechanical, capacitive, optical, etc.), scrolling wheels, touch pads, key pads, keyboards, microphones, cameras, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), etc. In some configurations, keyboards, headphones, displays, pointing devices such as trackpads, mice, and joysticks, and other input-output devices may be coupled to device 10 using wired or wireless connections (e.g., some of input-output devices 22 may be peripherals that are coupled to a main processing unit or other portion of device 10 via a wired or wireless link).

Input-output circuitry 20 may include wireless circuitry 24 to support or perform radio-frequency signal transmission and/or reception for device 10. Wireless circuitry 24 may be used for wireless communications. Wireless communications performed by wireless circuitry 24 may include or involve wireless data communications (e.g., where wireless data is carried by radio-frequency signals conveyed between wireless circuitry 24 and other communications equipment bidirectionally or unidirectionally), radio-frequency signal transmission, radio-frequency signal reception, and/or radio-based spatial ranging/sensing (e.g., radio detection and ranging (radar) operations, shorter range object detection such as near-field radio-frequency signal-based object detection, etc.). Radio-frequency signals conveyed by wireless circuitry 24 may include or carry wireless data (e.g., organized into frames, packets, symbols, datagrams, etc.), radar or other spatial ranging waveforms, continuous wave signals, chirp signals, control signals, management signals, reference signals, beacon signals, tones, pulses/impulses, waveforms associated with one or more communications protocols, and/or any other radio-frequency waveforms or signals. Wireless circuitry 24 is sometimes also referred to herein as wireless communications circuitry 24, wireless communication circuitry 24, communications circuitry 24, or simply as circuitry 24. Wireless circuitry 24 may include one or more antennas. Wireless circuitry 24 may also include baseband processor circuitry, transceiver circuitry, amplifier circuitry, filter circuitry, switching circuitry, radio-frequency transmission lines, and/or any other circuitry for transmitting and/or receiving radio-frequency signals using the antenna(s). Some or all of the components of wireless circuitry 24 may be disposed on, mounted to, communicatively coupled to, and/or integrated within the same substrate (e.g., a printed circuit board, semiconductor substrate, chip, integrated circuit (IC), IC packages, etc.) or may be distributed between two or more substrates (e.g., printed circuit boards, semiconductor substrates, chips, ICs, IC packages, etc.).

Wireless circuitry 24 may transmit and/or receive radio-frequency signals within a corresponding frequency band at radio frequencies (sometimes referred to herein as a communications band or simply as a "band"). The frequency bands handled by wireless circuitry 24 may include wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), a Wi-Fi^{®} 7 band, and/or other Wi-Fi^{®} bands (e.g., from 1875-5160 MHz), wireless personal area network (WPAN) frequency bands such as the 2.4 GHz Bluetooth^{®} band or other WPAN communications bands, cellular telephone frequency bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, etc.), other centimeter or millimeter wave frequency bands between 10-100 GHz, sub-THz frequency bands between around 100 GHz and 10 THz (e.g., 6G bands), near-field communications (NFC) frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, etc.), ultra-wideband (UWB) frequency bands that operate under the IEEE 802.15.4 protocol and/or other ultra-wideband communications protocols, satellite communications (satcom) bands (e.g., an IEEE C band (4-8 GHz), S band (2-4 GHz), L band (1-2 GHz), X band (8-12 GHz), W band (75-110 GHz), V band (40-75 GHz), K band (18-27 GHz), Kₐ band (26.5-40 GHz), Kᵤ band (12-18 GHz), etc.), unlicensed bands, communications bands under the family of 3GPP wireless communications standards, communications bands under the IEEE 802.XX family of standards, and/or any other desired frequency bands of interest. Different communications protocols may utilize different frequency bands for conveying radio-frequency signals. In some cases, two or more communications protocols may utilize one or more of the same frequency bands for conveying radio-frequency signals.

The example of FIG. 1 is illustrative and non-limiting. Although control circuitry 14 is shown separately from wireless circuitry 24 in the example of FIG. 1 for the sake of clarity, wireless circuitry 24 may include processing circuitry (e.g., one or more processors) that forms a part of processing circuitry 18 and/or storage circuitry that forms a part of storage circuitry 16 of control circuitry 14 (e.g., portions of control circuitry 14 may be implemented on wireless circuitry 24). As an example, control circuitry 14 may include baseband circuitry (e.g., one or more baseband processors) or other control circuitry that forms part of one or more radios in wireless circuitry 24. The baseband circuitry may, for example, access a communication protocol stack on control circuitry 14 (e.g., storage circuitry 20) to: perform user plane functions at a PHY layer, MAC layer, RLC layer, PDCP layer, SDAP layer, and/or PDU layer, and/or to perform control plane functions at the PHY layer, MAC layer, RLC layer, PDCP layer, RRC, layer, and/or non-access stratum layer. If desired, the PHY layer operations may additionally or alternatively be performed by radio-frequency (RF) interface circuitry in wireless circuitry 24.

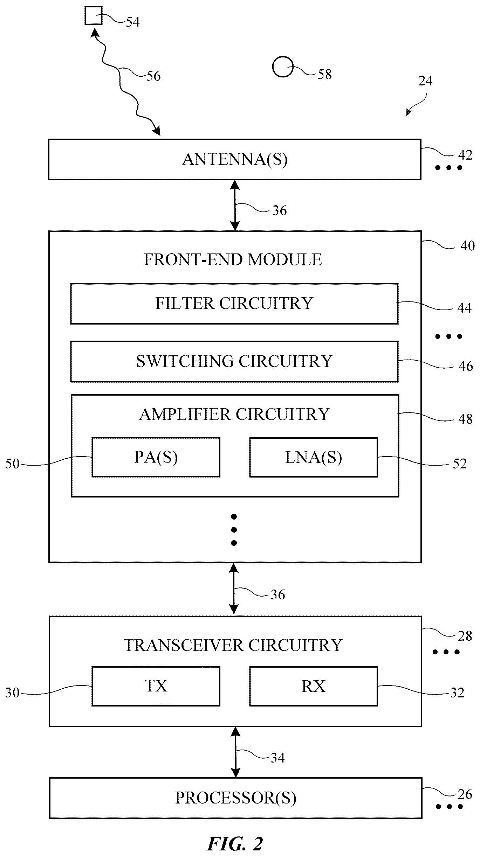

FIG. 2 is a diagram showing illustrative components within wireless circuitry 24. As shown in FIG. 2, wireless circuitry 24 may include a processor such as processor 26, radio-frequency (RF) transceiver circuitry such as radio-frequency transceiver 28, radio-frequency front end circuitry such as radio-frequency front end (RFFE) module (FEM) 40, and antenna(s) 42. Processor 26 may be a baseband processor, application processor, general purpose processor, microprocessor, microcontroller, digital signal processor, host processor, application specific signal processing hardware, or other type of processor. Processor 26 may be coupled to transceiver 28 over path 34. Transceiver 28 may be coupled to antenna 42 via radio-frequency transmission line path 36. Radio-frequency front end module 40 may be disposed on radio-frequency transmission line path 36 between transceiver 28 and antenna 42.

In the example of FIG. 2, wireless circuitry 24 is illustrated as including only a single processor 26, a single transceiver 28, a single front end module 40, and a single antenna 42 for the sake of clarity. In general, wireless circuitry 24 may include any desired number of processors 26, any desired number of transceivers 28, any desired number of front end modules 40, and any desired number of antennas 42. Each processor 26 may be coupled to one or more transceiver 28 over respective paths 34. Each transceiver 28 may include a transmitter circuit 30 configured to output uplink signals to antenna 42, may include a receiver circuit 32 configured to receive downlink signals from antenna 42, and may be coupled to one or more antennas 42 over respective radio-frequency transmission line paths 36. Each radio-frequency transmission line path 36 may have a respective front end module 40 disposed thereon. If desired, two or more front end modules 40 may be disposed on the same radio-frequency transmission line path 36. If desired, one or more of the radio-frequency transmission line paths 36 in wireless circuitry 24 may be implemented without any front end module disposed thereon.

Radio-frequency transmission line path 36 may be coupled to an antenna feed on antenna 42. The antenna feed may, for example, include a positive antenna feed terminal and a ground antenna feed terminal. Radio-frequency transmission line path 36 may have a positive transmission line signal path that is coupled to the positive antenna feed terminal on antenna 42. Radio-frequency transmission line path 36 may have a ground transmission line signal path that is coupled to the ground antenna feed terminal on antenna 42. This example is illustrative and, in general, antennas 42 may be fed using any desired antenna feeding scheme. If desired, antenna 42 may have multiple antenna feeds that are coupled to one or more radio-frequency transmission line paths 36.

Radio-frequency transmission line path 36 may include transmission lines that are used to route radio-frequency antenna signals within device 10 (FIG. 1). Transmission lines in device 10 may include coaxial cables, microstrip transmission lines, stripline transmission lines, edge-coupled microstrip transmission lines, edge-coupled stripline transmission lines, transmission lines formed from combinations of transmission lines of these types, etc. Transmission lines in device 10 such as transmission lines in radio-frequency transmission line path 36 may be integrated into rigid and/or flexible printed circuit boards.

While performing wireless transmission, processor 26 may provide transmit signals (e.g., digital or baseband signals) to transceiver 28 over path 34. Transceiver 28 may further include circuitry for converting the transmit (baseband) signals received from processor 26. For example, transceiver circuitry 28 may include mixer circuitry for up-converting (or modulating) the transmit (baseband) signals to radio frequencies prior to transmission over antenna 42. The example of FIG. 2 in which processor 26 communicates with transceiver 28 is illustrative. In general, transceiver 28 may communicate with a baseband processor, an application processor, general purpose processor, a microcontroller, a microprocessor, or one or more processors within circuitry 18. Transceiver circuitry 28 may also include digital-to-analog converter (DAC) and/or analog-to-digital converter (ADC) circuitry for converting signals between digital and analog domains. Transceiver 28 may use transmitter (TX) 30 to transmit the radio-frequency signals over antenna 42 via radio-frequency transmission line path 36 and front end module 40. Antenna 42 may transmit the radio-frequency signals to external wireless equipment by radiating the radio-frequency signals into free space.

While performing wireless reception, antenna 42 may receive radio-frequency signals from the external wireless equipment. The received radio-frequency signals may be conveyed to transceiver 28 via radio-frequency transmission line path 36 and front end module 40. Transceiver 28 may include circuitry such as receiver (RX) 32 for receiving signals from front end module 40 and for converting the received radio-frequency signals into corresponding baseband signals. For example, transceiver 28 may include mixer circuitry for down-converting (or demodulating) the received radio-frequency signals to baseband frequencies prior to conveying the received signals to processor 26 over path 34.

Front end module (FEM) 40 may include radio-frequency front end circuitry that operates on the radio-frequency signals conveyed (transmitted and/or received) over radio-frequency transmission line path 36. FEM 40 may, for example, include front end module (FEM) components such as radio-frequency filter circuitry 44 (e.g., low pass filters, high pass filters, notch filters, band pass filters, multiplexing circuitry, duplexer circuitry, diplexer circuitry, triplexer circuitry, etc.), switching circuitry 46 (e.g., one or more radio-frequency switches), radio-frequency amplifier circuitry 48 (e.g., one or more power amplifiers 50 and/or one or more low-noise amplifier circuits 52), signal attenuators, impedance matching circuitry (e.g., circuitry that helps to match the impedance of antenna 42 to the impedance of radio-frequency transmission line 36), antenna tuning circuitry (e.g., networks of capacitors, resistors, inductors, and/or switches that adjust the frequency response of antenna 42), radio-frequency coupler circuitry, charge pump circuitry, power management circuitry, digital control and interface circuitry, and/or any other desired circuitry that operates on the radio-frequency signals transmitted and/or received by antenna 42. Each of the front end module components may be mounted to a common (shared) substrate such as a rigid printed circuit board substrate or flexible printed circuit substrate. If desired, the various front end module components may also be integrated into a single integrated circuit chip. If desired, amplifier circuitry 48 and/or other components in FEM 40 such as filter circuitry 44 may also be implemented as part of transceiver circuitry 28.

Filter circuitry 44, switching circuitry 46, amplifier circuitry 48, and other circuitry may be disposed along radio-frequency transmission line path 36, may be incorporated into FEM 40, and/or may be incorporated into antenna 42 (e.g., to support antenna tuning, to support operation in desired frequency bands, etc.). These components, sometimes referred to herein as antenna tuning components, may be adjusted (e.g., using control circuitry 14) to tune the frequency response and wireless performance of antenna 42 over time.

Transceiver 28 may be separate from front end module 40. For example, transceiver 28 may be formed on another substrate such as the main logic board of device 10, a rigid printed circuit board, or flexible printed circuit that is not a part of front end module 40. As an example, processor 26 and/or portions of transceiver 28 (e.g., a host processor on transceiver 28) may form a part of control circuitry 14 of FIG. 1. Control circuitry 14 (e.g., portions of control circuitry 14 formed on processor 26, portions of control circuitry 14 formed on transceiver 28, and/or portions of control circuitry 14 that are separate from wireless circuitry 24) may provide control signals (e.g., over one or more control paths in device 10) that control the operation of front end module 40.

Transceiver 28 may include wireless local area network transceiver circuitry that handles WLAN communications bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), and/or other Wi-Fi^{®} bands (e.g., from 1875-5160 MHz), wireless personal area network transceiver circuitry that handles the 2.4 GHz Bluetooth^{®} band or other WPAN communications bands, cellular telephone transceiver circuitry that handles cellular telephone bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, 6G bands above 100 GHz, etc.), near-field communications (NFC) transceiver circuitry that handles near-field communications bands (e.g., at 13.56 MHz), satellite navigation receiver circuitry that handles satellite navigation bands (e.g., a GPS band from 1565 to 1610 MHz, a Global Navigation Satellite System (GLONASS) band, a BeiDou Navigation Satellite System (BDS) band, etc.), ultra-wideband (UWB) transceiver circuitry that handles communications using the IEEE 802.15.4 protocol and/or other ultra-wideband or impulse-based communications protocols, and/or any other desired radio-frequency transceiver circuitry for covering any other desired communications bands of interest.

Wireless circuitry 24 may include one or more antennas such as antenna 42. Antenna 42 may be formed using any desired antenna structures. For example, antenna 42 may be an antenna with a resonating element that is formed from loop antenna structures, patch antenna structures, inverted-F antenna structures, slot antenna structures, planar inverted-F antenna structures, helical antenna structures, monopole antennas, dipoles, hybrids of these designs, etc. Two or more antennas 42 may be arranged into one or more phased antenna arrays (e.g., for conveying radio-frequency signals at millimeter wave frequencies). Parasitic elements may be included in antenna 42 to adjust antenna performance. Antenna 42 may be provided with a conductive cavity that backs the antenna resonating element of antenna 42 (e.g., antenna 42 may be a cavity-backed antenna such as a cavity-backed slot antenna).

The term "convey radio-frequency signals" as used herein means the transmission and/or reception of the radio-frequency signals (e.g., for performing unidirectional and/or bidirectional wireless communications with external wireless communications equipment). Antennas 42 may transmit the radio-frequency signals by radiating the radio-frequency signals into free space (or to free space through intervening device structures such as a dielectric cover layer). Antennas 42 may additionally or alternatively receive the radio-frequency signals from free space (e.g., through intervening devices structures such as a dielectric cover layer). The transmission and reception of radio-frequency signals by antennas 42 each involve the excitation or resonance of antenna currents on an antenna resonating element in the antenna by the radio-frequency signals within the frequency band(s) of operation of the antenna.

In some implementations, wireless circuitry 24 may convey radio-frequency signals 56 with external equipment such as external communications equipment 54. External communications equipment 54 may include one or more other devices such as device 10 (e.g., a user equipment device), one or more wireless access points (APs), one or more wireless base stations (e.g., gNBs), and/or any other desired equipment that wirelessly transmits and/or receives radio-frequency signals 56. Radio-frequency signals 56 may, if desired, carry wireless communications data between wireless circuitry 24 and external communications equipment 54 (e.g., packets, symbols, frames, datagrams, data encoded in a series of impulses, etc.). Wireless communications data (sometimes also referred to simply as wireless data or data) may be conveyed bidirectionally or unidirectionally (e.g., in an uplink (UL) direction from wireless circuitry 42 to external communications equipment 54 and/or in a downlink (DL) direction from external communications equipment 54 to wireless circuitry 42). The wireless communications data may, for example, include wireless data associated with a telephone call, streaming media content, internet browsing, wireless data associated with software applications running on device 10, email messages, etc.

In addition to, or instead of, conveying wireless communications data with external communications equipment 54, wireless circuitry 24 may use antennas 42 to perform radio-frequency sensing operations (sometimes referred to herein as radio-based sensing, spatial ranging, radio detection and ranging (radar), object detection, or simply as sensing). The sensing operations may allow device 10 to detect (e.g., sense or identify) the presence, location, orientation, and/or velocity (motion) of objects external to device 10 such as external object 58. Detecting, sensing, or identifying the presence, location, orientation, and/or velocity (motion) of external object 58 at any given time or over a given time period is sometimes also referred to herein as object detection operations, detecting the external object or performing spatial ranging operations, ranging operations, radio-based sensing operations, or range detection. Wireless circuitry 24 may perform sensing operations over a relatively short range such as ranges of a few cm from antennas 42 or over longer ranges such as ranges of dozens of cm, a few meters, dozens of meters, etc. External objects such as external object 58 may still be present around, nearby, adjacent to, overlapping, on top of, in contact with, and/or within a line of sight of device 10 and may still affect the operations of wireless circuitry 24 even when wireless circuitry 24 does not use antennas 42 to perform radio-frequency sensing operations on external object 58 or other objects.

External object 58 may be, for example, the ground, a building, part of a building, a wall, furniture, a ceiling, a person, a body part (e.g., the head, hand, finger, or other body part of the user of device 10 or other humans in the vicinity of device 10), an animal, a vehicle, a landscape or geographic feature, an obstacle, external communications equipment, another device of the same type as device 10 or a peripheral/accessory device such as a gaming controller, stylus (e.g., for providing input to a touch and/or force-sensitive display on device 10), or remote control, or any other physical object or entity that is external to device 10. External object 58 may be an animate (moving or living) object or an inanimate (stationary or non-living) object.

During radio-frequency signal transmission, some of the radio-frequency signals transmitted by antenna(s) 42 may be incident upon external objects such as external object 58. In these scenarios, the amount of radio-frequency energy exposure at external object 58 may be characterized by one or more radio-frequency (RF) energy exposure metrics. The RF exposure (RFE) metrics may include specific absorption rate (SAR) for radio-frequency signals at frequencies less than 6 GHz (in units of W/kg), maximum permissible exposure (MPE) for radio-frequency signals at frequencies greater than 6 GHz (in units of mW/cm²), and total exposure ratio (TER), which combines SAR and MPE. As used herein, the RFE of wireless circuitry 24 may be defined as the SAR, MPE, TER, and/or any other radio-frequency energy exposure metric of wireless circuitry 24.

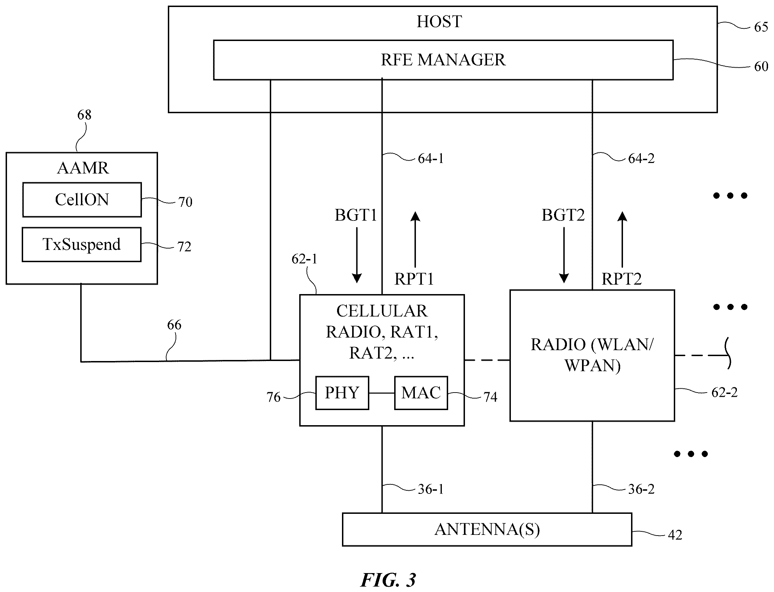

Regulatory requirements often impose limits on the amount of RFE permissible for external object 8 within the vicinity of antenna(s) 42 over a specified time period (e.g., an SAR limit and an MPE limit over a corresponding averaging period). A regulatory body governing a geographic area where device 10 is located may impose, for example, a SAR limit of 1.6 W/kg over a corresponding averaging period. Each radio in wireless circuitry 24 that is subject to a SAR limit may need to share an overall RFE budget for wireless circuitry 24 such that the radios collectively meet this SAR limit over the averaging period. Each radio may transmit signals according to a different respective RFE budget and all of the respective RFE budgets may collectively form the overall RFE budget for wireless circuitry 24. Wireless circuitry 24 may include an RFE manager for ensuring that radios in wireless circuitry 24 comply with these regulatory requirements. FIG. 3 is a circuit diagram of wireless circuitry 24 in implementations where wireless circuitry 24 includes an RFE manager 60 for managing compliance with RFE requirements for a set of two or more radios 62.

As shown in FIG. 3, RFE manager 60 may be implemented and/or included within a host 65 of device 10. Host 65 may be implemented using and/or may include one or more processors (e.g., a host processor) that execute software (code) stored on storage circuitry in device 10. Wireless circuitry 24 may include a set of two or more radios 62 such as at least a first radio 62-1 and a second radio 62-2. Radios 62 may implement any desired RATs and communications protocols. In implementations that are sometimes described herein as an example, radio 62-1 may implement one or more cellular telephone RATs and one or more cellular telephone protocols and radio 62-2 may implement a non-cellular telephone RAT and a non-cellular telephone protocol. Radio 62-1 is therefore sometimes referred to herein as cellular radio 62-1 and radio 62-2 is sometimes referred to herein as non-cellular radio 62-2. Non-cellular radio 62-2 may, for example, be a WLAN and/or WPAN radio that implements one or more WLAN and/or WPAN RATs/protocols. This example is illustrative and non-limiting. In general, radio 62-1 may implement any desired set of one or more communications protocol and/or RATs (e.g., non-cellular RAT(s), cellular RAT(s), etc.) and radio 62-2 may implement any desired communications protocol and/or RAT (e.g., a cellular RAT, a non-cellular RAT, etc.). The operations of radios 62-1 and 62-2 as described herein can be extended to any desired number of radios 62 in wireless circuitry 24.

Each radio 62 in wireless circuitry 24 may include a respective transmitter 30 and/or a respective receiver 32 (FIG. 2) and may form part of transceiver circuitry 28 of FIG. 2. If desired, each radio 62 may also include baseband circuitry that forms a part of processor(s) 26 of FIG. 2. Each radio 62 in wireless circuitry 24 may be communicatively coupled to one or more antennas 42 over a corresponding radio-frequency transmission line path 36 (e.g., cellular radio 62-1 may be coupled to antenna(s) 42 via radio-frequency transmission line path 36-1, non-cellular radio 62-2 may be coupled to antenna(s) 42 via radio-frequency transmission line path 36-2, etc.). The components of each radio 62 may be implemented and/or disposed on a respective chipset in wireless circuitry 24. For example, the components of cellular radio 62-1 may be disposed on a first chipset, a first integrated circuit (IC), a first substrate (e.g., printed circuit board), a first system on chip (SOC), and/or a first IC package in wireless circuitry 24. On the other hand, the components of non-cellular radio 62-2 may be disposed on a second chipset, a second integrated circuit (IC), a second substrate (e.g., printed circuit board), a second SOC, and/or a second IC package in wireless circuitry 24. Radios 62 are sometimes also referred to herein as modulator-demodulators (modems) 62.

RFE manager 60 may be communicatively coupled to each radio 62 in wireless circuitry 24 over a corresponding control path 64 (e.g., RFE manager 60 may be coupled to cellular radio 62-1 over control path 64-1, may be coupled to non-cellular radio 62-2 over control path 64-2, etc.). Control paths 64 may be digital control paths, as one example. RFE manager 60 may also be coupled to a communications bus 66 of wireless circuitry 24. Communications bus 66 may, for example, include an inter-chip communications bus, one or more signal, data, power, and/or control paths within one or more radios 62, one or more signal, data, power, and/or control paths within RFE manager 60 and/or host 65, and/or one or more signal, data, power, and/or control paths external to radios 62 and RFE manager 60. Control paths 64 may form a part of communications bus 66 or may be separate from communications bus 66.

Wireless circuitry 24 may include storage circuitry such as always accessible memory region (AAMR) 68 (e.g., forming a part of storage circuitry 16 of FIG. 1). AAMR 68 may remain powered, accessible, and/or readable by other components in wireless circuitry 24 over time, even when one or more of the other components in wireless circuitry 24 are otherwise disabled, inactive, asleep, idle, or powered off. AAMR 68 may be external to cellular radio 62-1 and RFE manager 60 or may, if desired, be implemented as a part of cellular radio 62-1 (e.g., may be integrated into the same chipset, IC, SOC, or IC package as other components of cellular radio 62-1, may be disposed on the same substrate or printed circuit board as cellular radio 62-1, etc.). RFE manager 60 and each radio 62 may be communicatively coupled to AAMR 68 via communications bus 66. RFE manager 60 and radios 62 may read, receive, retrieve, fetch, and/or otherwise identify information and/or data stored on AAMR 68 via communications bus 66. If desired, at least cellular radio 62-1 may transmit information to AAMR 68 over communications bus 66 for storage at AAMR 68.

RFE manager 60 is sometimes also referred to herein as SAR manager 60 (e.g., in implementations where radios 62-1 and 62-2 are subject only to SAR requirements but not MPE requirements), MPE manager 60 (e.g., in implementations where radios 62-1 and 62-2 are subject only to MPE requirements but not SAR requirements), or TER manager 60. The components of RFE manager 60 may be implemented in hardware (e.g., one or more processors, circuit components, logic gates, diodes, transistors, switches, arithmetic logic units (ALUs), registers, application-specific integrated circuits, field-programmable gate arrays, etc.) and/or software on device 10 (e.g., as a part of host 65). RFE manager 60 is sometimes also referred to herein as RFE management circuitry 60, RFE management engine 60, RFE management block 60, RFE processor 60, or RFE controller 60.

RFE manager 60 may generate a respective RFE budget BGT for use by each radio 62 in transmitting radio-frequency signals using antenna(s) 42. For example, RFE manager 60 may generate a first RFE budget BGT1 for radio 62-1, a second RFE budget BGT2 for radio 62-2, etc. RFE budgets BGT are sometimes also be referred to herein as SAR/MPE budgets BGT or TER budgets BGT. RFE manager 60 may provide RFE budgets BGT to radios 62 over control paths 64. For example, RFE manager 60 may transmit RFE budget BGT1 to cellular radio 62-1 over control path 64-1, may transmit RFE budget BGT2 to non-cellular radio 62-2 over control path 64-2, etc. Each RFE budget BGT may include a corresponding SAR budget and/or a corresponding MPE budget (e.g., depending on whether the radio subject to that budget is subject to SAR and/or MPE limits). Each RFE budget BGT may specify the amount of RFE (e.g., SAR and/or MPE) that may be generated by the corresponding radio 62 in transmitting radio-frequency signals over a corresponding regulatory averaging period while still satisfying the RFE regulatory limits. Circuitry in each radio 62 may adjust one or more radio-frequency transmission characteristics based on its received RFE budget BGT (e.g., to prevent that radio from consuming more RFE than is specified in its received RFE budget BGT over the regulatory averaging period). For example, a radio 62 may adjust the maximum transmit power level of its transmitted radio-frequency signals (e.g., may perform a corresponding maximum power reduction (MPR)), may adjust the transmit power level of its transmitted radio-frequency signals (e.g., between two different transmit (TX) power levels that are less than or equal to the maximum transmit power level of the radio), may adjust the uplink duty cycle of the transmitted radio-frequency signals, may switch the frequency of the transmitted radio-frequency signals, and/or may perform other actions to ensure that the radio does not consume more RFE than is specified by its RFE budget BGT over the averaging period (e.g., ensuring that its RFE budget BGT remains satisfied over the averaging period).

In some scenarios, each radio 62 in device 10 is assigned a fixed SAR/MPE budget, such that the distribution of the total available RF exposure budget across RATs remains static over time to meet the overall RFE regulatory limits on the operation of device 10 (e.g., over the averaging period). In these scenarios, each radio may use look-up tables to derive the maximum transmit power levels allowed for its fixed RFE budget and then maintains its transmit power level below that maximum transmit power level to satisfy the RFE limits. However, assigning static RFE budgets to the radios in this way without considering the radio needs for the current operating state/environment of device 10 can result in sub-optimal budget distribution between the radios. For example, the part of the overall RFE budget that is not used by one radio cannot be re-assigned to another radio that may urgently need to transmit at a higher power level or increased duty cycle.

To mitigate these issues, RFE manager 60 may dynamically update or adjust the RFE budgets distributed to radios 62 over time. RFE manager 60 may dynamically allocate RFE budgets to radios 62 based on feedback from radios 62. For example, as shown in FIG. 3, each radio 62 may generate an RFE report RPT that identifies the amount of the assigned RFE budget that was actually consumed by that radio during different sub-periods (sometimes referred to herein as consumption periods, reporting periods, or instantaneous periods) of the averaging period. Each radio 62 may transmit its generated RFE reports RPT to RFE manager 60 over control paths 64 (e.g., cellular radio 62-1 may generate RFE reports RPT1 and may transmit RFE reports RPT1 to RFE manager 60 over control path 64-1, non-cellular radio 62-2 may generate RFE reports RPT2 and may transmit RFE reports RPT2 to RFE manager 60 over control path 64-2, etc.). RFE reports RPT are sometimes also referred to herein as RFE feedback reports RPT, RFE feedback signals RPT, or RFE feedback messages RPT.

RFE manager 60 may receive each RFE report RPT through the active transmission of the reports by radios 62 (e.g., as control signals, control messages, or other control data) or by querying or retrieving the reports from radios 62 (e.g., by transmitting control signals or commands to the radios instructing the radios to transmit the corresponding report to RFE manager 60). RFE manager 60 may generate updated RFE budgets BGT for radios 62 based on the received RFE reports RPT and based on the current or expected communication needs of device 10. Radios 62 may adjust signal transmission to ensure compliance with the updated RFE budgets BGT received from RFE manager 60. Each radio 62 may transmit its report RPT and RFE manager 60 may transmit RFE budgets BGT periodically (e.g., after a predetermined reporting period has elapsed). In this way, RFE manager 60 may help to ensure that radios 28 can continue to transmit radio-frequency signals that meet the active and dynamic needs of device 10 while still satisfying the RFE limits imposed on device 10 over the averaging period.

In some implementations that are described herein as an example, cellular radio 62-1 includes circuitry (e.g., transmitters, receivers, chips, etc.) that implement at least a first cellular telephone RAT (e.g., RAT1) and a second cellular telephone RAT (e.g., RAT2). In general, cellular radio 62 may implement any desired number of one or more cellular telephone RATs. The cellular telephone RAT(s) implemented by cellular radio 62-1 may include, as examples, the 5G NR RAT, the 4G LTE RAT, the 3G Universal Mobile Telecommunications System (UMTS) RAT, the 2G Global System for Mobile Communications (GSM) RAT, the 2G General Packet Radio Service (GPRS) RAT, and/or other cellular telephone RATs. A first portion of cellular radio 62-1 that implements the 5G NR RAT may, for example, transmit 5G signals using antenna(s) 42, a second portion of cellular radio 62-1 that implements the 4G LTE RAT may, for example, transmit 4G signals using antenna(s) 42, a third portion of cellular radio 62-3 that implements the 3G RAT may transmit 3G signals using antenna(s) 42, etc.

Cellular radio 62-1 may include a physical layer (PHY) block 76 and a medium access control (MAC) block 74. PHY block 76 may include PHY (e.g., Layer 1 (L1)) hardware (e.g., circuitry, one or more processors, etc.) and/or software (e.g., radio control software executed by one or more processors on cellular radio 62-1) that performs physical layer (L1) operations on signals and/or data. PHY block 76 is sometimes also referred to herein as PHY circuitry 76, PHY software 76, radio control software 76, physical layer 76 of cellular radio 62-1, PHY portion 76 of cellular radio 62-1, or simply as the PHY 76 of cellular radio 62-1. MAC block 74 may include MAC (e.g., an RRC/Upper MAC layer, etc.) hardware (e.g., circuitry, one or more processors, etc.) and/or software (e.g., executed by one or more processors on cellular radio 62-1) that performs RRC/upper MAC layer operations on signals and/or data. MAC block 74 is sometimes also referred to herein as MAC circuitry 74, MAC layer 74, MAC software 74, RRC/upper MAC portion 74 of cellular radio 62-1, MAC portion 74 of cellular radio 62-1, or simply as the MAC 74 of cellular radio 62-1.

AAMR 68 may store information that is used by one or more radios 62 and/or RFE 60 during signal transmission. AAMR 68 may, for example, store information identifying a current state or mode of cellular radio 62-1 (e.g., a current transmission state of cellular radio 62-1). In implementations that are described herein as an example, AAMR 68 may store at least a first flag 70 and/or a second flag 72 associated with the operating state of cellular radio 62-1. First flag 70 and/or second flag 72 may serve to advertise, to other components of wireless circuitry 24, the current operating state of cellular radio 62-1. Cellular radio 62-1 may generate first flag 70 and/or second flag 72 based on its current operating (e.g., signal transmission) state. PHY block 76 of cellular radio 62-1 may transmit first flag 70 and/or second flag 72 to AAMR 68 via communications bus 66 for storage on AAMR 68. RFE manager 60 and/or other radios such as non-cellular radio 62-2 may read, retrieve, receive, and/or otherwise identify first flag 70 and second flag 72 from AAMR 68 via communications bus 66 during operation. PHY block 76 of cellular radio 62-1 may update/change the first flag 70 and/or second flag 72 stored on AAMR 68 over time (e.g., as the transmission state of cellular radio 62-1 changes over time). In this way, all of the radios 62 in wireless circuitry 24 and RFE manager 60 may have knowledge of the current transmission state of cellular radio 62-1 over time. RFE manager 60 and/or non-cellular radio 62-2 may use information about the current transmission state of cellular radio 62-1 (e.g., as identified by the flags 70 and 72 stored on AAMR 68) to update the RFE budget provided to and/or consumed by non-cellular radio 62-2 and/or to otherwise adjust signal transmission by non-cellular radio 62-2.

First flag 70 may be, for example, a cellular ON flag, indicator, or identifier that identifies or indicates whether cellular radio 62-1 is on or active. First flag 70 is sometimes also referred to herein as cellular radio activation flag 70, CellON flag 70, CellON indicator 70, CellON identifier 70, indicator 70, or identifier 70. CellON flag 70 may include any desired number of one or more bits that can be used to indicate the status of cellular radio 62-1. In some implementations that are described herein as an example, CellON flag 70 includes a single bit, sometimes also referred to herein as a CellON flag bit, a CellON status bit, a CellON indicator bit, a CellON identifier bit, a flag bit, an indicator bit, or an identifier bit (e.g., having either a first value equal to binary "0" or a second value equal to binary "1"). This may serve to identify the activation status of cellular radio 62-1 while consuming as little memory in AAMR as possible. CellON flag 70 may, for example, have the first value (binary "0," sometimes also referred to herein as CellON = 0) when cellular radio 62-1 is in an inactive state, turned off, disconnected (e.g., in an RRC disconnected state), asleep, idle, etc. On the other hand, CellON flag 70 may have the second value (binary "1," sometimes also referred to herein as CellON = 1) when cellular radio 62-1 is active, turned on, connected (e.g., in an RRC connected state), and/or actively transmitting signals. If desired, the communications protocol(s) implemented by cellular radio 62-1 may specify which operating conditions of cellular radio 62-1 produce a CellON flag 70 having the first value or the second value. The value of CellON flag 70 is sometimes also referred to herein as the state of CellON flag 70, the CellON value of cellular radio 62-1, the CellON state of cellular radio 62-1, or the CellON status of cellular radio 62-1.

Second flag 72 may be, for example, a transmission (TX) suspension (TxSuspend) flag, indicator, or identifier that identifies or indicates whether cellular radio 62-1 has suspended signal transmission when CellON flag 70 otherwise indicates that cellular radio 62-1 is active or turned on (e.g., when CellON flag 70 has the second value of binary "1" but the radio is otherwise in an RRC disconnected state). This may occur, for example, when cellular radio 62-1 is performing an inter-RAT redirection or a reconnection procedure, a mobility operation, or a re-establishment procedure. Second flag 72 is sometimes also referred to herein as TX suspend flag 72, TX suspension flag 72, TxSuspend flag 72, TxSuspend identifier 72, TxSuspend indicator 72, identifier 72, or indicator 72. TxSuspend flag 72 may include any desired number of one or more bits that can be used to indicate the transmission suspension status of cellular radio 62-1. In some implementations that are described herein as an example, TxSuspend flag 72 includes a single bit, sometimes also referred to herein as a TxSuspend flag bit, a TxSuspend indicator bit, a TxSuspend identifier bit, or a TxSuspend status bit (e.g., having either a first value equal to binary "0" or a second value equal to binary "1"). This may serve to identify the transmission suspension status of cellular radio 62-1 while consuming as little memory in AAMR as possible. TxSuspend flag 72 may, for example, have the second value (binary "1," sometimes also referred to herein as TxSuspend = 1) while CellON flag 70 has its second value (binary "1") and while cellular radio 62-1 is performing an inter-RAT redirection procedure, a mobility procedure, or a re-establishment procedure, and may have a first value (binary "0," sometimes also referred to herein as TxSuspend = 0) at other times (e.g., during active signal transmission).

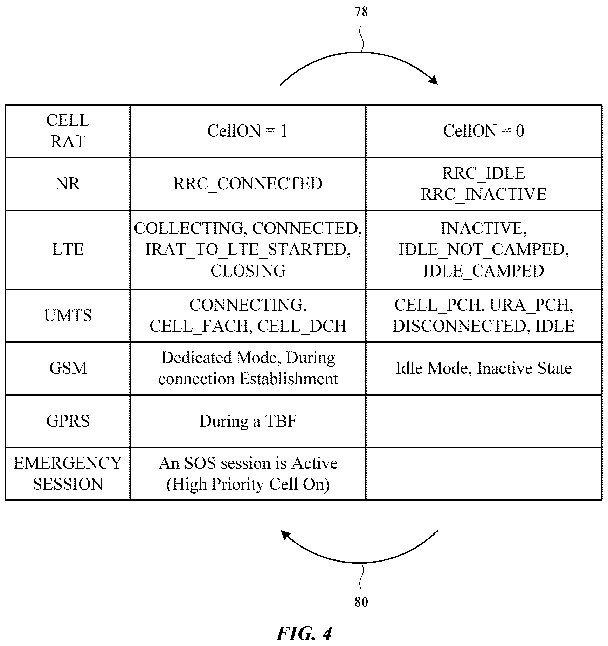

FIG. 4 is a table showing how CellON flag 70 may have different values to represent different transmission or communication states of cellular radio 62-1. In general, particular values of CellON flag 70 may have different meanings depending on the active RAT of cellular radio 62-1. The first column of FIG. 4 lists different cellular RATs that may be implemented by different respective portions of cellular radio 62-1. The second column of FIG. 4 lists different radio states of cellular radio 62-1 that may be represented by a CellON flag 70 having the second value (binary "1"). The third column of FIG. 4 lists different radio states of cellular radio 62-1 that may be represented by a CellON flag 70 having the first value (binary "0").

For example, as shown in FIG. 4, when a 5G NR portion of cellular radio 62-1 is performing 5G NR communications, PHY block 76 of cellular radio 62-1 may set CellON flag 70 to binary "1" in AAMR 68 (FIG. 3) when cellular radio 62-1 is in a radio resource control (RRC) connected mode with external communications equipment 54 (FIG. 2) (e.g., in an RRC_CONNECTED state or mode of cellular radio 62-1) and may set CellON flag 70 to binary "0" in AAMR 68 when cellular radio 62-1 is in an RRC idle or inactive state/mode (e.g., in an RRC_IDLE or RRC_INACTIVE state or mode of cellular radio 62-1). As another example, when a 4G LTE portion of cellular radio 62-1 is performing 4G LTE communications, PHY block 76 of cellular radio 62-1 may set CellON flag 70 to binary "1" in AAMR 68 when cellular radio 62-1 is in a connecting, connected, closing, or IRAT_TO_LTE_STARTED state, and may set CellON flag 70 to binary "0" in AAMR 68 when cellular radio 62-1 is in an inactive or idle state (e.g., an IDLE_NOT_CAMPED or IDLE_CAMPED state). When a UMTS portion of cellular radio 62-1 is performing UMTS communications, PHY block 76 of cellular radio 62-1 may set CellON flag 70 to binary "1" in AAMR 68 when cellular radio 62-1 is in a connecting, CELL_FACH, or CELL_DCH state, and may set CellON flag 70 to binary "0" in AAMR 68 when cellular radio 62-1 is in a disconnected, idle, CELL_PCH, or URA_PCH mode/state. The example of FIG. 4 is illustrative and non-limiting and, in general, cellular radio 62-1 may store different values of CellON flag 70 in AAMR 68 to represent any desired operating/transmitting state/mode of cellular radio 62-1 in for any desired cellular radio RATs.

As shown by arrow 78, cellular radio 62-1 may switch from a connected state (e.g., an RRC connected state) to a disconnected state (e.g., an RRC disconnected state). This switch is sometimes also referred to as a connection release, a connection detachment, an RRC detachment, an RRC connection detachment, an RRC connection release, an RRC release, an RRC disconnection, a disconnection, a release, or a detachment. When this occurs, PHY block 76 of cellular radio 62-1 may, if desired, update the CellON flag 70 stored in AAMR 68 (e.g., from binary "1" to binary "0"). Conversely, as shown by arrow 80, cellular radio 62-1 may switch from a disconnected state (e.g., an RRC disconnected state) to a connected state (e.g., an RRC connected state). This switch is sometimes also referred to as a connection attachment, a connection, an attachment, an RRC connection attachment, an RRC connection, or an RRC attachment. When this occurs, PHY block 76 of cellular radio 62-1 may, if desired, update the CellON flag 70 stored in AAMR 68 (e.g., from binary "0" to binary "1").

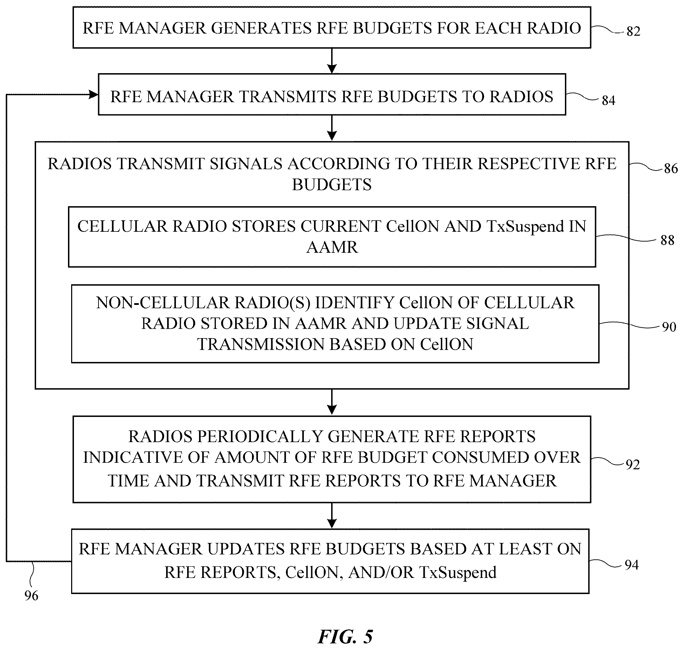

FIG. 5 is a flow chart of illustrative operations involved in transmitting radio-frequency signals using wireless circuitry 24 of FIG. 3. At operation 82, RFE manager 60 may generate RFE budgets BGT for the radios 62 in wireless circuitry 24. RFE manager 60 may generate each RFE budget based on the RAT(s) implemented by each radio, sensor data indicative of external objects near one or more antennas 42 and/or around device 10, the transmission characteristics of each radio, one or more characteristics (e.g., contents) of wireless data to be transmitted by each radio, channel conditions and/or propagation conditions for each radio, a communications schedule for device 10 (e.g., as generated and/or maintained by a network in communication with device 10), the applicable regulatory RFE limits imposed on device 10 (e.g., given the current geographic location of device 10 as identified from external communications equipment, sensing circuitry on device 10, and/or a satellite navigation receiver on device 10), the regulatory averaging period, statistical and/or historical information associated with prior transmission and/or RFE consumption by radios 62 and/or other devices (e.g., crowd-sourced statistical and/or historical RFE information), one or more RFE reports RPT previously received from one or more of radios 62, and/or any other desired factors.

At operation 84, RFE manager 60 may transmit each RFE budget BGT to its corresponding radio 62 over control paths 64. Each radio 62 may store its received RFE budget BGT for use during subsequent signal transmissions.

At operation 86, radios 62 may transmit radio-frequency signals based on (e.g., subject, pursuant, and/or according to) their respective RFE budgets BGT received from RFE manager 60. For example, each radio 62 may transmit radio-frequency signals at one or more different transmit power levels and/or using one or more different uplink duty cycles that cause that radio 62 to exhibit or consume a particular amount of RFE over the averaging period that is constrained, dictated, and/or limited by its RFE budget BGT. RFE manager 60 may allocate different amounts of consumable RFE in the RFE budgets BGT distributed across all of the radios 62 in wireless circuitry 24 in a manner that serves to maximize the wireless performance of radios 62 given their current transmission needs while also ensuring all of the radios 62 in wireless circuitry 24 collectively meet the regulatory limit on RFE imposed on device 10. Operation 86 may continue to be performed concurrent with operations 92 and 94 of FIG. 5.

If desired, PHY block 76 of cellular radio 62-1 may generate CellON flag 70 and TxSuspend flag 72 based on its current operating state and store CellON flag 70 and TxSuspend flag 72 in AAMR 68 (at operation 88). Cellular radio 62-1 may update one or both flags as the operating state of cellular radio 62-1 changes over time. If desired, non-cellular radios such as non-cellular radio 62-2 and/or RFE manager 60 may identify the current operating state of cellular radio 62-1 by reading or identifying the value of CellON flag 70 and/or TxSuspend flag 72 stored in AAMR 68 (at operation 90). If desired, the non-cellular radio(s) may update/adjust their own signal transmission based on the current operating state of cellular radio 62-1. For example, if CellON flag 70 has a value of binary "1," non-cellular radio 62-2 may reduce its consumed RFE for the current averaging period under the assumption that cellular communications will be relatively high and will consume a relatively high amount of RFE. On the other hand, if CellON flag 70 has a value of binary "0," non-cellular radio 62-2 may increase its consumed RFE for the current averaging period under the assumption that the cellular radio will not consume any of its RFE budget. Put differently, cellular radio 62-1 may inform the other radios of wireless circuitry 24 when it is in a transmitting state (e.g., an RRC connected state) using the CellON flag 70 stored in AAMR 68. Each radio 62 may be responsible for self-management of its own RFE consumption during signal transmission. Each non-cellular radio may utilize the on/off status of cellular radio 62-1 (e.g., as identified by CellON flag 70) to adjust its own RFE budget in a manner that optimizes performance.

At operation 92, each radio 62 in wireless circuitry 24 may periodically generate a RFE report RPT indicative of the amount of RFE consumed over a preceding predetermined reporting by that radio 62 while transmitting signals (e.g., each RFE report RPT may identify a time domain average of SAR and/or MPE consumed by the corresponding radio). For example, a radio 62 that performs more signal transmission at higher signal power levels and/or duty cycles will consume more RFE over a given time period than a radio 62 that performs less signal transmission at lower signal power levels and/or duty cycles. The presence of external objects in the vicinity of antenna(s) 42 used by each radio 62 may also impact the amount of RFE consumed by each radio (e.g., where radios that transmit using antennas that are relatively close to an external object consume more RFE than radios that transmit using antennas that are relatively far from external objects). RFE manager 60 and/or radios 62 may receive sensor data indicative of the presence of external objects adjacent antenna(s) 42 and may use this information when computing RFE consumption. Each radio 62 may transmit its generated RFE report RPT to RFE manager 60 (e.g., periodically after each passing of the predetermined reporting period).

At operation 94, RFE manager 60 may update one or more of the RFE budgets BGT for radios 62 based on the reports RPT received from radios 62. For example, RFE manager 60 may re-assign unused portions of the RFE budget of one radio to the RFE budget of another radio that exceeds or is close to exceeding its own RFE budget. If desired, RFE manager 60 may also update one or more of the RFE budgets BGT for radios 62 based on the value of CellON flag 70 and/or TxSuspend flag 72 in AAMR 68. Processing may loop back to operation 84 via path 96 and RFE manager 60 may transmit the updated RFE budgets BGT to radios 62 for use during subsequent signal transmission.

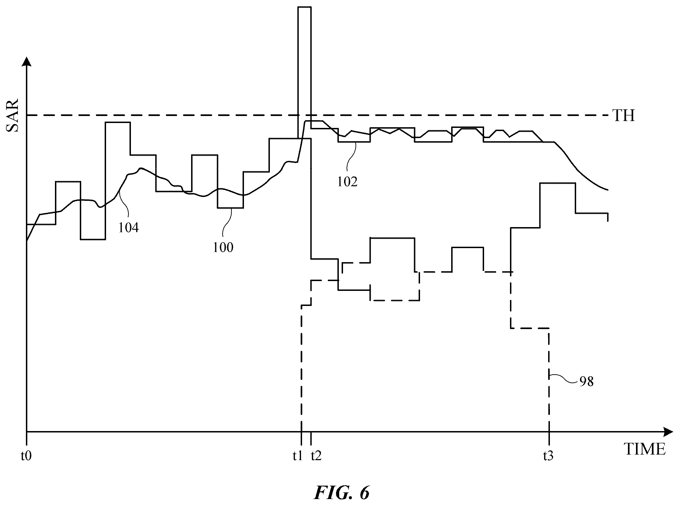

FIG. 6 is a plot showing one example of SAR consumption as a function of time for cellular radio 62-1 and non-cellular radio 62-2 during signal transmission. As shown in FIG. 6, curve 100 plots the instantaneous SAR of non-cellular radio 62-2 while transmitting signals according to its RFE budget BGT2. Curve 98 plots the instantaneous SAR of cellular radio 62-1 while transmitting signals according to its RFE budget BGT1. Curve 102 plots the total instantaneous SAR consumed by cellular radio 62-1 and non-cellular radio 62-2. Curve 104 plots the time-averaged total SAR consumed by cellular radio 62-1 and non-cellular radio 62-2 (e.g., over a rolling average window with a duration equal to the averaging period of the RFE limit imposed on wireless circuitry 24).

In this example, between times t0 and t1, non-cellular radio 62-2 transmits radio-frequency signals while cellular radio 62-1 is inactive. This causes non-cellular radio 62-2 to consume instantaneous SAR while cellular radio 62-1 does not consume SAR. Non-cellular radio 62-2 transmits one or more RFE reports RPT2 to RFE manager 60 identifying the consumed SAR associated with curve 100 between times t0 and t1. Cellular radio 62-1 may also transmit one or more RFE reports RPT1 to RFE manager 60 identifying that cellular radio 62-1 has consumed no SAR between times t0 and t1. Before time t1, the time average total SAR (curve 104) is produced entirely from SAR consumed by non-cellular radio 62-2 and remains below a regulatory SAR limit TH imposed on wireless circuitry 24. At time t1, cellular radio 62-1 begins transmitting radio-frequency signals, causing a spike in total instantaneous SAR (curve 102) that temporarily exceeds regulatory SAR limit TH. Cellular radio 62-1 transmits an RFE report RPT1 to RFE manager 60 identifying that cellular radio 62-1 has consumed an amount of SAR given by curve 98. However, this spike does not cause wireless circuitry 24 to violate the RFE requirements imposed upon wireless circuitry 24 because the time averaged total SAR (curve 104) still remains below regulatory SAR limit TH across the preceding (rolling) averaging period.

In response to the RFE reports received from radios 62-1 and 62-2, RFE manager 60 may reduce the RFE budget BGT2 supplied to non-cellular radio 62-2 at time t2 and/or may increase the RFE budget BGTT1 supplied to cellular radio 62-1 at time t2. Additionally, or alternatively, non-cellular radio 62-2 may detect that cellular radio 62-1 has begun transmitting by reading CellON flag 70 from AAMR 68 and may decrease its instantaneous consumed SAR in response to detection that CellON flag 70 is equal to binary "1" at and after time t1. The reduction in instantaneous SAR consumed by non-cellular radio 62-2 after time t2 may offset the increase in instantaneous SAR consumed by cellular radio 62-1 after time t2, such that the time-averaged SAR consumed by radios 62-1 and 62-2 over the rolling averaging period remains below a regulatory SAR limit TH. In this way, wireless circuitry 24 may continue to comply with regulatory SAR limit TH even though cellular radio 62-1 caused an instantaneous total SAR consumption that exceed regulatory SAR limit TH from time t1 until time t2.

In practice, certain situations may arise that can cause cellular radio 62-1 to rapidly toggle its CellON flag back and forth between binary "1" and binary "0." This may occur, for example, when cellular radio 62-1 performs an operation that causes an RRC disconnection followed shortly by an RRC attachment attempt, such as during an inter-RAT redirection procedure, a mobility procedure, or a re-establishment procedure. A mobility procedure may involve switching between communicating with a first external device to communicating with a second external device, where an RRC detachment occurs between communicating with the first and second devices. A re-establishment procedure may involve re-connecting to an external device after an RRC detachment has occurred with the external device. Inter-RAT redirection is sometimes described herein to illustrate the operation of wireless circuitry 24 as an example.

When performing an inter-RAT redirection, for example, cellular radio 62-1 switches from performing wireless communications using a first cellular RAT to instead performing wireless communications using a second cellular RAT. In these situations, cellular radio 62-1 operates in a connected mode (e.g., an RRC connected state) using a first (source) cellular RAT, disconnects from communicating with external communications equipment under the first cellular RAT (e.g., performs an RRC release for the first cellular RAT), and then connects to external communications equipment using a second (target) cellular RAT (e.g., attaches to the external communications equipment and enters an RRC connected state for the second cellular RAT). This is unlike a handover procedure, which maintains a first RRC connection until a second RRC connection has already been established before releasing the first RRC connection. If care is not taken, when performing this type of inter-RAT redirection, cellular radio 62-1 can rapidly toggle the value of CellON flag 70 in AAMR 68 from binary "1" to binary "0" and then back to binary "1" in a relatively short time interval (e.g., less than 1 second).

Because non-cellular radio 62-2 updates its own signal transmission and/or RFE consumption based on the state of CellON flag 70 in AAMR 68 (see, e.g., operation 90 of FIG. 5), this rapid toggling in the value of CellON flag 70 can undesirably and needlessly deteriorate the wireless performance of non-cellular radio 62-2. For example, rapid toggling of CellON flag 70 can cause a reduction in signal quality and/or an increase in the block error rate (BLER) of non-cellular radio 62-2. As another example, rapid toggling of CellON flag 70 can reduce the effective range of non-cellular radio 62-2, which may reduce the uplink throughput of non-cellular radio 62-2. In addition, there may be a risk of intermittent performance issues in non-cellular radio 62-2 due to rapid toggling during certain key signaling scenarios (e.g., high-speed mobility scenarios). RFE control can also become challenging with respect to instantaneous RFE consumption when there are frequent transitions between CellON flag values, because there may be delays between already active radios adjusting their transmit powers.

In some implementations, wireless circuitry 24 utilizes a timer to avoid rapid toggling of CellON flag 70 during an inter-RAT redirection, mobility operation, or re-establishment procedure by cellular radio 62-1. In these implementations, the transition of CellON flag 70 between values is intentionally delayed based on a corresponding timer (sometimes also referred to as a sticky timer) that is adjustable by the host. The timer may, for example, have a duration of 5 seconds. These implementations utilize a hysteresis-based approach to mitigate rapid toggling in CellON flag 70. For example, instead of immediately updating the value of CellON flag 70 when the cellular radio 62-1 switches from an RRC connected state in a first cellular RAT to a disconnected state, the cellular radio may delay updating the value of CellON flag 70 until after the timer has elapsed. The timer may be sufficiently long such that the radio is able to complete its inter-RAT redirection, mobility, or re-establishment procedure to re-enter an RRC connection state before the timer has elapsed. By the time the timer has elapsed, the cellular radio is already back in a connected state, causing the value of CellON flag 70 to remain unchanged.

Although this type of hysteresis-based approach is straightforward to implement in wireless circuitry 24, it does not allow the value of CellON flag 70 to be updated if the radio control coexistence manager in cellular radio 62-1 is in a sleep state, and can potentially result in excessive durations where CellON flag 70 is incorrectly stored as binary "1" when it should otherwise be stored as binary "0" (e.g., during a network initiated detachment or an out-of-service scenario). It would therefore be desirable for cellular radio 62-1 to be able to prevent rapid toggling of CellON flag 70 without the use of a hysteresis-based sticky timer.

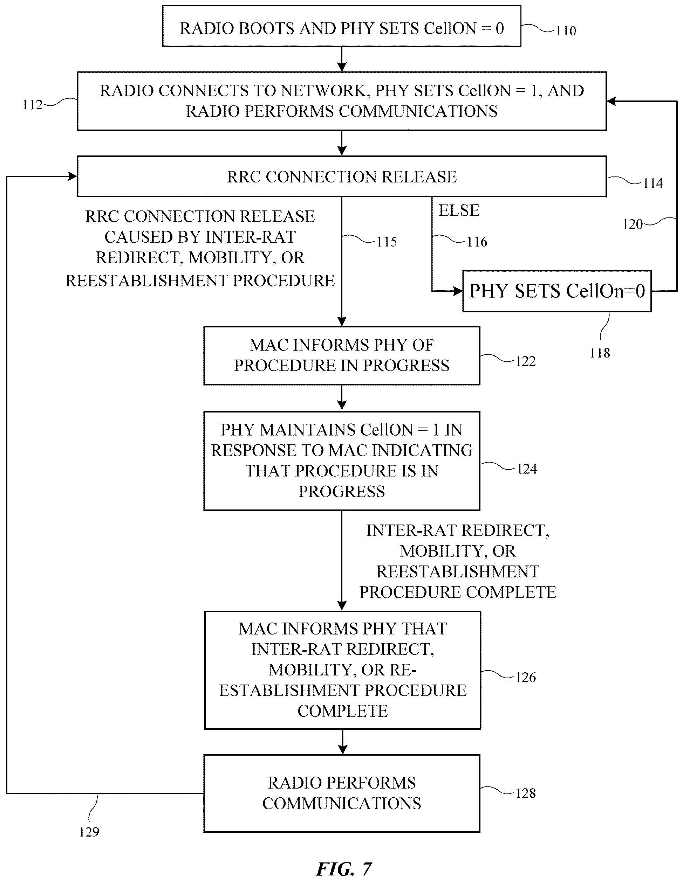

FIG. 7 is a flow chart of illustrative operations that may be performed by cellular radio 62-1 to mitigate rapid toggling in CellON flag 70 without the use of a sticky timer (e.g., during an inter-RAT redirection, a mobility operation, and/or a re-establishment operation). In this example, an interface between PHY block 76 and MAC block 74 of cellular radio 62-1 (FIG. 3) is introduced to avoid rapid toggling of CellON status by maintaining the state of CellON flag 70 during mobility, redirection, and/or re-establishment. The operations of FIG. 7 may, for example, be performed while processing operation 86 of FIG. 5.

At operation 110, cellular radio 62-1 boots up. Because cellular radio 62-1 is not in a connected state immediately after booting up, PHY block 76 of cellular radio 62-1 may set the value of CellON flag 70 equal to binary "0" in AAMR 68 (e.g., indicating that cellular radio 62-1 is not operating in a connected mode or state). If desired, PHY block 76 may transmit a signal identifying or including CellON = 0 to AAMR 68 via communications bus 66 (FIG. 3) and/or to an in-device coexistence platform.

At operation 112, cellular radio 62-1 may connect to a cellular network using a first cellular RAT. This connection may place cellular radio 62-1 into a connected mode (e.g., an RRC connected state). If desired, MAC block 74 of cellular radio 62-1 may transmit a connection request to PHY block 76 of cellular radio 62-1. In response to receiving the connection request from MAC block 74, PHY block 76 may transmit a signal identifying or including CellON = 1 to AAMR 68 via communications bus 66 (FIG. 3) and/or to an in-device coexistence platform, updating the value of CellON flag 70 to binary "1" in AAMR 68 (e.g., indicating that cellular radio 62-1 is operating in a connected mode or state). Cellular radio 62-1 may begin performing wireless communications (e.g., may begin conveying wireless data) with an external device (e.g., external communications equipment 54 of FIG. 2) using the first cellular RAT while in the connected state.

At operation 114, an RRC connection release may occur, disconnecting or detaching cellular radio 62-1 from the external device. In general, MAC block 74 (FIG. 3) of cellular radio 62-1 has knowledge of both the RRC state of cellular radio 62-1 and the reason why the RRC connection release occurred (e.g., because MAC block 74 performs RRC functions for cellular radio 62-1). However, on its own, PHY block 76 is generally unaware of RRC procedures being performed by cellular radio 62-1 and is unaware of the RRC connection state of cellular radio 62-1. If/when the RRC connection release was caused by an event that can produce rapid toggling of the state of CellON flag 70, processing may proceed from operation 114 to operation 122 via path 115. This may occur if/when the RRC connection release was caused by the beginning of an inter-RAT redirection procedure performed by cellular radio 62-1, a mobility procedure performed by cellular radio 62-1, or a re-establishment procedure performed by cellular radio 62-1, as examples. If/when the RRC connection release was caused by an event that would not otherwise produce rapid toggling of the state of CellON flag 70 (e.g., a network-initiated RRC connection release), processing may proceed to operation 118 via path 116. At operation 118, PHY block 76 of cellular radio 62-1 may switch the value of CellON flag 70 in AAMR 68 back to binary "0," advertising to the other radios and the RFE manager that cellular radio 62-1 is not on/active. Processing may then loop back to operation 112 via path 120 as subsequent communications are performed.

At operation 122 (e.g., responsive to the RRC connection release being caused by an event that can produce rapid toggling of CellON flag 70), MAC block 74 may transmit a signal to PHY block 76 that informs PHY block 76 that cellular radio 62-1 is currently performing a procedure that could produce rapid toggling of CellON flag 70 (e.g., an inter-RAT redirect procedure, a mobility procedure, or a re-establishment procedure) and/or may transmit a signal that instructs PHY block 76 to maintain the value of CellON flag 70 in AAMR 68 as binary "1" despite the RRC connection release.

At operation 124, responsive to receipt of the signal from MAC block 74, PHY block 76 may maintain CellON = 1 in AAMR 68 without changing the value of the CellON flag in AAMR 68 (e.g., PHY block 76 may forego updating CellON flag 70 to the value that corresponds to cellular radio 62-1 being in a disconnected state). Put differently, the interface between MAC block 74 and PHY block 76 may stop PHY block 76 from changing CellON flag 70 back to binary "0" due to cellular radio 62-1 performing an RRC connection release. Processing may proceed to operation 126 when cellular radio 62-1 has completed the procedure that could produce rapid toggling of CellON flag 70 (e.g., the inter-RAT redirect procedure, mobility procedure, or re-establishment procedure). This may occur, for example, after cellular radio 62 has returned to an RRC connected state. When the procedure is an inter-RAT redirect procedure, for example, this may occur once cellular radio 62-1 has entered an RRC connected state for a second cellular RAT that is different from the first cellular RAT.

At operation 126, MAC block 74 may transmit a signal that informs PHY block 76 that the procedure that could produce rapid toggling of CellON flag 70 (e.g., the inter-RAT redirect procedure, mobility procedure, or re-establishment procedure) has been completed. This signal may, if desired, include an indication of whether the procedure was successful or not. PHY block 76 may use this information when determining how to update CellON flag 70 during subsequent transmissions.

At operation 128, cellular radio 62-1 may perform communications in the RRC connected state. In implementations where an inter-RAT redirection was performed, cellular radio 62-1 may perform these communications using the second cellular RAT instead of the first cellular RAT. Communications may continue in this way until cellular radio 62-1 disconnects again (e.g., processing may loop back to operation 114 via path 129). The value of CellON flag 70 in AAMR 68 remains binary "1" while processing operations 124-128. In this way, PHY block 76 may keep CellON = 1 in AAMR 68 from operation 112 through operation 128, preventing rapid toggling of CellON flag 70 that could otherwise deteriorate the performance of non-cellular radio 62-2.

The first value of CellON flag 70 (e.g., binary "1") is sometimes also referred to herein as CellON flag 70 being TRUE or having a first logical/binary value. The second value of CellON flag 70 (e.g., binary "0") is sometimes also referred to herein as CellON flag 70 being FALSE or having a second logical/binary value. If desired, the binary values of CellON flag 70 may be swapped (e.g., a value of binary "0" may represent CellON flag 70 being TRUE, corresponding to cellular radio 62-1 being in on or in a connected state, and a value of binary "1" may represent CellON flag 70 being FALSE, corresponding to cellular radio 62-1 being in off or in a disconnected state).

While processing operations 122-126, cellular radio 62-1 advertises its CellON state as binary "1" (TRUE) but, because cellular radio 62-1 is actually disconnected during operations 122-126, cellular radio 62-1 does not periodically generate and transmit RFE reports RPT1 to RFE manager 60 during operations 122-126. This may cause temporal gaps in RFE averaging performed by RFE manager 60, which may impact RFE functionality and can result in inefficient utilization of RFE budgets across the radios 62 in wireless circuitry 24. In a worst case, RFE manager 60 may assume that cellular radio 62 consumes a maximum amount of its assigned RFE budget BGT1 during this period in which RFE manager 60 does not receive RFE reports RPT1. However, this may cause RFE manager 60 to allocate unnecessarily low RFE budgets to the other radios 62 in wireless circuitry 24, limiting the wireless performance of the other radios. A reduction of transmit power by 3 dB in non-cellular radio 62-2 caused by a reduced RFE budget BGT2 may, for example, result in as much as a 50% reduction in the uplink throughput of non-cellular radio 62-2. In addition, RFE manager 60 may assign RFE budget to cellular radio 62-1 while an RRC connection re-establishment timer (e.g., a 3GPP-specified T311 timer) is running. This timer may be as long as 30 seconds in some regions, which can represent a substantial amount of time during which the cellular radio does not actually consume RFE. This can cause inefficient RFE budget allocation that deteriorates the performance of non-cellular radio 62-2. In addition, it may also not be possible to provide instantaneous RFE budget boosts to non-cellular radio 62-2 during this time, which can limit the instantaneous transmit power of non-cellular radio 62-2. In sum, if care is not taken, RFE manager 60 may be unable to determine whether the absence of RFE reports RPT1 received from cellular radio 62-1 while processing operations 122-126 is due to a reporting malfunction in cellular radio 62-1 or due to cellular radio 62-1 performing a genuine cellular procedure such as an inter-RAT redirection procedure, a mobility procedure, or a re-establishment procedure.

To help mitigate these issues, cellular radio 62-1 may utilize TxSuspend flag 72 to inform or indicate to RFE manager 60 that the absence of RFE reports RPT1 received from cellular radio 62-1 is caused by a genuine cellular procedure such as an inter-RAT redirection procedure, a mobility procedure, or a re-establishment procedure rather than a reporting malfunction. In this way, RFE manager 60 may use the value of TxSuspend flag 72 to determine the current state of cellular radio 62-1 (e.g., without needing to assume a worst case scenario that cellular radio 62-1 is consuming all of its RFE budget BGT1 while cellular radio 62-1 has stopped transmission of RFE reports RPT1). This may allow RFE manager 60 to increase the allocation of RFE budget to other (e.g., non-cellular) radios 62 in wireless circuitry 24, which may boost the wireless performance of those radios while cellular radio 62-1 performs the inter-RAT redirection procedure, mobility procedure, or re-establishment procedure.

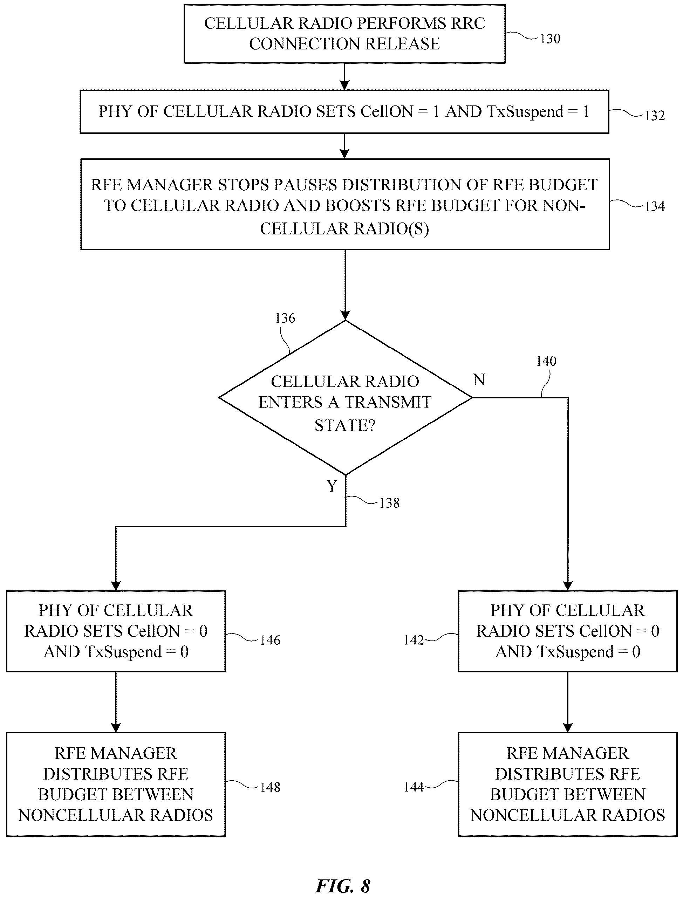

FIG. 8 is a flow chart of operations showing one example of how cellular radio 62-1 and RFE manager 60 may utilize TxSuspend flag 72 during radio-frequency signal transmission. TxSuspend flag 72 may, for example, serve to convey the real-time transmission status of cellular radio 62-1 to RFE manager 60. Some or all of the operations of FIG. 8 may, for example, be performed in parallel with operations 122-126 of FIG. 7.

At operation 130, cellular radio 62-1 may perform an RRC connection release (e.g., at operation 114 of FIG. 7). In this example, the RRC connection release may be caused by an event that could otherwise cause rapid toggling between CellON = 1 and CellON = 0 (e.g., an inter-RAT redirection operation, mobility operation, or re-establishment operation).

At operation 132, PHY block 76 of cellular radio 62-1 may set CellON flag 70 equal to binary "1" in AAMR 68 (e.g., responsive to an instruction or signal received from MAC block 74 at operation 122 of FIG. 7). In the absence of more information, RFE manager 60 might assume that cellular radio 62 is still in an RRC connected state and is still actively transmitting signals because CellON flag 70 is set to "1." However, because cellular radio 62-1 has suspended transmissions while disconnected, PHY block 76 may also set TxSuspend flag 72 equal to binary "1" in AAMR 68. This may serve to advertise to RFE manager 60 and other radios 62 in wireless circuitry 24 that cellular radio 62-1 has stopped or suspended transmission despite the fact that CellON flag 70 is set equal to "1" in AAMR 68 (e.g., as maintained by PHY block 76 to prevent rapid toggling between CellON status while performing an inter-RAT redirection operation, mobility operation, or re-establishment operation). RFE manager 60 may detect the current operating/transmission state of cellular radio 62-1 based on the value of CellON flag 70 and the value of TxSuspend flag 72 in AAMR 68. More particularly, RFE manager 60 may have knowledge, from CellON = 1 and TxSuspend = 1 as stored in AAMR 68, that cellular radio 62-1 is not in a transmitting state despite CellON flag 70 being set equal to "1." This may serve to inform RFE manager 60 that the absence of RFE reports RPT1 from cellular radio 62-1 is not caused by a reporting malfunction, but rather from a genuine cellular process.

At operation 134, responsive to detecting or identifying that cellular radio 62-1 has CellON = 1 and TxSuspend = 1 (e.g., as stored in AAMR 68), RFE manager 60 may pause or stop the periodic transmission of RFE budget BGT1 to cellular radio 62-1. If desired, RFE manager 60 may pause or stop allocating RFE budget to cellular radio 62-1 and/or may allocate some or all of the RFE budget that would otherwise be allocated to cellular radio 62-1 to non-cellular radio 62-2 and/or other radios in wireless circuitry 24 (e.g., RFE manager 60 may boost the RFE budget of radios other than cellular radio 62-1 using the unused RFE budget for cellular radio 62-1 while still complying with the regulatory RFE limit). This may serve to improve the wireless performance of the non-cellular radios in wireless circuitry 24 while cellular radio 62-1 is in a disconnected state but with CellON = 1, without violating the regulatory RFE limit.

After a predetermined time period has elapsed (e.g., the T311 timer), processing may proceed to operation 136. At operation 136, wireless circuitry 24 may determine whether cellular radio 62-1 enters a transmitting state. If/when the cellular radio does not enter a transmitting state (e.g., does not enter an RRC connected mode) after the predetermined time period has elapsed, processing may proceed to operation 142 via path 140.

At operation 142, PHY block 76 of cellular radio 62-1 may set CellON = 0 (e.g., because cellular radio 62-1 is inactive) and may set TxSuspend = 0 in AAMR 68 (e.g., may clear TxSuspend flag 72).

At operation 144, RFE manager 60 may distribute an overall RFE budget that complies with the regulatory requirement between the non-cellular radios 62 in wireless circuitry 24. RFE manager 60 may, if desired, allocate a relatively small RFE budget or no RFE budget to cellular radio 62-1 because cellular radio 62-1 is inactive. This may serve to boost the wireless performance of the non-cellular radios, for example. On the other hand, if/when the cellular radio enters a transmitting state after the predetermined time period has elapsed (e.g., re-enters an RRC connected mode), processing may proceed from operation 136 to operation 146 via path 138.

At operation 146, PHY block 76 of cellular radio 62-1 may set CellON = 1 (e.g., because cellular radio 62-1 is active) and may set TxSuspend = 0 in AAMR 68 (e.g., may clear the TxSuspend flag because cellular radio 62-1 is performing signal transmission and has not suspended signal transmission). Setting TxSuspend = 0 may serve to instruct RFE manager 60 to continue to periodically distribute RFE budgets BGT1 for cellular radio 62-1 (e.g., because cellular radio 62-1 is actively transmitting signals).

At operation 148, RFE manager 60 may distribute an overall RFE budget that complies with the regulatory requirement between both cellular radio 62-1 and the non-cellular radios 62 in wireless circuitry 24. The first value of TxSuspend flag 72 (e.g., binary "1") is sometimes also referred to herein as TxSuspend flag 72 being TRUE or having a first logical/binary value. The second value of TxSuspend flag 72 (e.g., binary "0") is sometimes also referred to herein as TxSuspend flag 72 being FALSE or having a second logical/binary value. If desired, the values of TxSuspend flag 72 may be swapped (e.g., a value of binary "0" may represent TxSuspend flag 72 being TRUE, corresponding to cellular radio 62-1 having suspended transmissions, and a value of binary "1" may represent TxSuspend flag 72 being FALSE, corresponding to cellular radio 62-1 having not suspended transmissions).

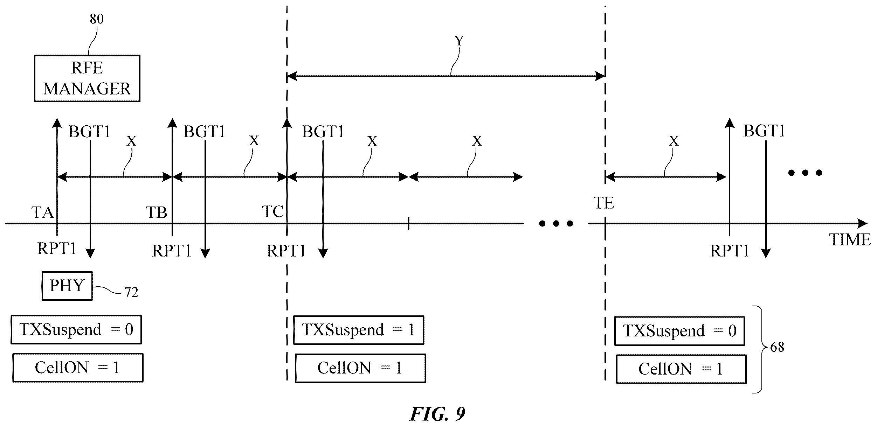

FIG. 9 is a timing diagram illustrating the operations of FIG. 8. As shown in FIG. 9, at time TA, the PHY block 76 of cellular radio 62-1 may transmit an RFE report RPT1 to RFE manager 60. RFE report RPT1 may identify an amount of RFE consumed by cellular radio 62-1 during a previous reporting period. RFE manager 60 may update the RFE budget BGT1 for cellular radio 62-1 based on RFE report RPT1 and may transmit the updated RFE budget BGT1 to cellular radio 62-1. Cellular radio 62-1 may transmit radio-frequency signals pursuant, subject, and/or according to the updated RFE budget BGT1 for a predetermined interval such as during the next reporting period X, until time TB.

At time TB, PHY block 76 of cellular radio 62-1 may transmit another RFE report RPT1 to RFE manager 60. This RFE report may identify the amount of RFE consumed by cellular radio 62-1 between times TA and TB (e.g., during the preceding reporting period X). RFE manager 60 may once again update the RFE budget BGT1 for cellular radio 62-1 based on the RFE report RPT1 transmitted at time TB and may transmit the updated RFE budget BGT1 to cellular radio 62-1. Cellular radio 62-1 may then transmit radio-frequency signals pursuant, subject, and/or according to the updated RFE budget BGT1 during the next reporting period X, until time TC.

From time TA until time TC, cellular radio 62-1 is active in a connected state and performs signal transmissions. As such, PHY block 76 sets CellON = 1 and sets TxSuspend = 0 in AAMR 68 from time TA until time TC. At time TC, cellular radio 62-1 performs an RRC connection release (e.g., at operation 130 of FIG. 8). Responsive to an instruction from MAC block 74 (e.g., at operation 122 of FIG. 7), PHY block 76 may keep CellON = 1 in AAMR 68 despite the RRC connection release (e.g., to prevent rapid toggling between CellON statuses). On the other hand, PHY block 76 may activate TxSuspend flag 72, switching the flag from binary "0" to binary "1" in AAMR 68 (e.g., indicating that the L1 of the RAT of cellular radio 62-1 is in a sleep state despite the RRC state for CellON being TRUE for cellular radio 62-1).

RFE manager 60 may detect, determine, or identify (e.g., read) that TxSuspend flag 72 has a value equal to binary "1" from AAMR 68. In response to this detection, RFE manager 60 may stop transmitting RFE budgets BGT1 to cellular radio 62-1 for the duration of a network timer Y (e.g., a T311 timer). In addition, RFE manager 60 may allocate the unused RFE budget that would otherwise have been allocated to cellular radio 62-1 during network timer Y to the non-cellular radios in wireless circuitry 24 (e.g., while processing operation 134 of FIG. 8).

In the example of FIG. 9, cellular radio 62-1 enters a transmit state after network timer Y has elapsed (at time TE). At time TE, PHY block 76 clears TxSuspend flag 72 (e.g., sets TxSuspend flag 72 to binary "0" in AAMR 68) and keeps CellON flag 70 equal to binary "1," indicating that cellular radio 62-1 is performing transmissions after time TE. Cellular radio 62-1 may resume periodic transmission of its RFE reports RPT1 to RFE manager 60. RFE manager 60 may resume generation of RFE budgets BGT1 for cellular radio 62-1 and may periodically transmit RFE budgets BGT1 to cellular radio 62-1. RFE manager 60 may distribute the overall RFE budget of wireless circuitry 24 between cellular radio 62-1 and the non-cellular radios after time TE (e.g., while processing operation 148 of FIG. 8). TxSuspend flag 72 being reset to zero may also serve to trigger adjustments to RFE budget reservations of non-cellular radio 62-2.

In this way, PHY block 76 of cellular radio 62-1 may dynamically update TxSuspend flag 72 to reflect the real-time transmission status of cellular radio 62-1. This real-time transmission status may be conveyed to all other radios in wireless circuitry 24 that depend on or that update signal transmission and/or RFE consumption based on the CellON status of cellular radio 62-1 (e.g., non-cellular radio 62-2). While cellular transmission activity is paused or suspended, PHY block 76 sets TxSuspend flag 72 to signal to the other radios and to RFE manager 60 that ongoing transmissions have been halted by cellular radio 62-1, freeing additional RFE budget to be used by the other radios in wireless circuitry 24. In addition, TxSuspend flag 72 may act as a low-overhead signaling mechanism that ensures that the non-cellular radios in wireless circuitry 24 have up-to-date information on transmission conditions by wireless circuitry 24 (e.g., forming a seamless interaction between cellular radio 62-1 and the other radios of wireless circuitry 24). TxSuspend flag 72 may also serve to notify the other radios in wireless circuitry 24 about the end of a TxSuspend event with a non-zero amount of lead time, allowing those radios to immediately apply transmission corrections to account for the cellular radio resuming transmissions. Utilizing the TxSuspend flag in this way may also serve to enhance device efficiency while ensuring compliance with RFE requirements. For example, the TxSuspend flag may effectively prevent conservative assignment of RFE budget to non-cellular radio 62-2 and/or may provide some immunity towards false positive error detection by RFE manager 60. RFE manager 60 may also control non-cellular radio 62-2 to perform an instantaneous transmit power boost while TxSuspend = 1 without violating the RFE requirement, which may improve system performance and user experience.

PHY block 76 may set TxSuspend = 1 while performing an inter-RAT redirection operation, a mobility operation, or a re-establishment operation, as just three examples. This is non-limiting. As other examples, PHY block 76 may activate or trigger TxSuspend flag 72 (e.g., may set TxSuspend = 1) while CellON = 1 during an Evolved Packet System Fallback (EPSFB) procedure (e.g., an inter-RAT redirection success or failure from 5G to 4G), a Radio Link Failure (RLF) procedure (e.g., a re-establishment and/or cell search procedure utilizing the T311 timer), a Circuit Switched Fallback (CSFB) procedure (e.g., an inter-RAT redirection success or failure from 4G to 4G), an Out of Service (OOS) procedure, an inter-RAT redirection success or failure from 4G to 5G, a network detachment event (e.g., caused by a NAS detach timer), etc.

The methods and operations described above in connection with FIGS. 1-8 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., storage circuitry 16 and/or wireless communications circuitry 24 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., processing circuitry in wireless circuitry 24, processing circuitry 18 of FIG. 1, etc.). The processing circuitry may include microprocessors, application processors, digital signal processors, central processing units (CPUs), application-specific integrated circuits with processing circuitry, or other processing circuitry.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In accordance with an embodiment, a method of operating wireless circuitry includes transmitting, using a first radio, first radio-frequency signals based on a first radio-frequency exposure (RFE) budget while a first status flag associated with the first radio has a first value in storage circuitry; performing, using the first radio, an operation that includes a radio resource control (RRC) connection release; causing, using a medium access control (MAC) block of the first radio, a physical layer (PHY) block of the first radio to maintain the first value of the status flag in the storage circuitry for a duration of the operation; and transmitting, using a second radio, second radio-frequency signals based on a second RFE budget and the first status flag in the storage circuitry.

In accordance with another embodiment, transmitting the first radio-frequency signals optionally includes transmitting the first radio-frequency signals using a first cellular telephone radio access technology (RAT) and transmitting the second radio-frequency signals includes transmitting the second radio-frequency signals using a non-cellular telephone RAT.

In accordance with another embodiment, the method optionally further includes transmitting, using the first radio, third radio-frequency signals in a second cellular telephone RAT that is different from the first cellular telephone RAT after completion of the operation, where the operation includes an inter-RAT redirection.

In accordance with another embodiment, the operation optionally includes a mobility operation, a re-establishment operation, or an out of service (OOS) operation.

In accordance with another embodiment, the first status flag optionally includes a single-bit identifier that identifies whether the first radio is on.

In accordance with another embodiment, the single-bit identifier optionally has a first logical value while the first radio transmits the first radio-frequency signals and during the operation, the method further includes performing, using the first radio, an additional RRC release responsive to an instruction from a network in communication with the first radio; and instructing, using the MAC block of the first radio, the PHY block of the first radio to set the single-bit identifier to a second logical value responsive to the additional RRC release.

In accordance with another embodiment, the method optionally further includes providing, using the MAC block of the first radio, an indication to the PHY block of the first radio upon completion of the operation; maintaining, using the PHY block of the first radio, the first value of the first flag in the storage circuitry responsive to the indication indicating that the first radio has established a new RRC connection after completion of the operation; and switching, using the PHY block of the first radio, the first flag to a second value in the storage circuitry responsive to the indication indicating that the radio has not established the new RRC connection after completion of the operation.

In accordance with another embodiment, the method optionally further includes changing, using the PHY block of the first radio, a second status flag in the storage circuitry after the RRC release, the second status flag being associated with a suspension of signal transmission by the first radio.

In accordance with another embodiment, the method optionally further includes adjusting, using one or more processors, the first RFE budget or the second RFE budget based on the first status flag and the second status flag.

In accordance with another embodiment, the first status flag optionally includes a first single-bit identifier, the second status flag includes a second single-bit identifier, the first single-bit identifier has a first value while the first radio transmits the first radio-frequency signals and during the operation, the first single-bit identifier has a second value while the first radio is off, the second single-bit identifier has a third value while the first radio transmits the first radio-frequency signals, and the second single-bit identifier has, during the operation, a fourth value that is different from the third value.

In accordance with another embodiment, the method optionally further includes stopping, using the one or more processors, transmission of the first RFE budget to the first radio for a predetermined time period in response to the first single-bit identifier having the first value and the second single-bit identifier having the fourth value.

In accordance with another embodiment, the storage circuitry optionally includes an always active memory region (AAMR), the first flag includes a CellON flag, the second flag includes a TxSuspend flag, and the predetermined time period includes an RRC connection re-establishment timer.

In accordance with another embodiment, the method optionally further includes increasing, using the one or more processors, the second RFE budget in response to the first single-bit identifier having the first value and the second single-bit identifier having the fourth value.

In accordance with an embodiment, wireless circuitry includes a first radio configured to transmit first radio-frequency signals according to a first radio-frequency exposure (RFE) budget; a second radio configured to transmit second radio-frequency signals according to a second RFE budget; storage circuitry that stores a status flag indicative of whether the first radio has suspended radio-frequency transmission; and one or more processors communicatively coupled to the first radio, the second radio, and the storage circuitry, where the one or more processors are configured to periodically transmit the first RFE budget to the first radio and the second RFE budget to the second radio, and update the second RFE budget in response to the status flag having a first value indicative of the first radio having suspended radio-frequency transmission.

In accordance with another embodiment, the one or more processors optionally being further configured to stop, for a predetermined time period, transmission of the second RFE budget to the first radio in response to the status flag having the first value.

In accordance with another embodiment, the storage circuitry optionally includes an always accessible memory region (AAMR).

In accordance with another embodiment, a physical layer (PHY) of the first radio is optionally configured to change the status flag from a second value to the first value in response to a medium access control (MAC) layer of the first radio indicating that the first radio has performed an operation that involves a radio resource control (RRC) release, the operation includes an inter-radio-access technology redirection, a mobility operation, a re-establishment operation, or an out-of-service operation.

In accordance with an embodiment, wireless circuitry includes one or more processors configured to generate a radio-frequency exposure (RFE) budget; a radio communicatively coupled to the one or more processors and configured to transmit radio-frequency signals according to the RFE budget; and an always accessible memory region (AAMR) that stores a first bit and a second bit associated with a status of the radio, where the radio is configured to set the first bit to a first value and the second bit to a second value while the radio transmits the radio-frequency signals, the radio is configured switch the first value of the first bit in response to receipt of a connection release instruction from a wireless network, and the radio is configured switch the second value of the second bit in response to the radio performing an operation that involves a suspension of signal transmission while the first bit has the first value.

In accordance with another embodiment, the wireless circuitry optionally further includes an additional radio communicatively coupled to the one or more processors, the one or more processors being further configured to adjust, based on the first bit and the second bit, transmission of the RFE budget to the radio and radio-frequency signal transmission by the additional radio.

In accordance with another embodiment, the first bit optionally includes a CellON identifier and the second bit includes a TxSuspend identifier.

The foregoing is merely illustrative and various modifications can be made to the described embodiments. The foregoing embodiments may be implemented individually or in any combination.

## Claims

1. A method of operating wireless circuitry comprising:
transmitting, using a first radio, first radio-frequency signals based on a first radio-frequency exposure (RFE) budget while a first status flag associated with the first radio has a first value in storage circuitry;
performing, using the first radio, an operation that includes a radio resource control (RRC) connection release;
causing, using a medium access control (MAC) block of the first radio, a physical layer (PHY) block of the first radio to maintain the first value of the status flag in the storage circuitry for a duration of the operation; and
transmitting, using a second radio, second radio-frequency signals based on a second RFE budget and the first status flag in the storage circuitry.

2. The method of claim 1, wherein transmitting the first radio-frequency signals comprises transmitting the first radio-frequency signals using a first cellular telephone radio access technology (RAT) and transmitting the second radio-frequency signals comprises transmitting the second radio-frequency signals using a non-cellular telephone RAT.

3. The method of claim 2, further comprising:
transmitting, using the first radio, third radio-frequency signals in a second cellular telephone RAT that is different from the first cellular telephone RAT after completion of the operation, wherein the operation comprises an inter-RAT redirection.

4. The method of claim 1, wherein the operation comprises a mobility operation, a re-establishment operation, or an out of service (OOS) operation.

5. The method of claim 1, wherein the first status flag comprises a single-bit identifier that identifies whether the first radio is on, wherein the single-bit identifier has a first logical value while the first radio transmits the first radio-frequency signals and during the operation, the method further comprising:
performing, using the first radio, an additional RRC release responsive to an instruction from a network in communication with the first radio; and
instructing, using the MAC block of the first radio, the PHY block of the first radio to set the single-bit identifier to a second logical value responsive to the additional RRC release.

6. The method of claim 1, further comprising:
providing, using the MAC block of the first radio, an indication to the PHY block of the first radio upon completion of the operation;
maintaining, using the PHY block of the first radio, the first value of the first flag in the storage circuitry responsive to the indication indicating that the first radio has established a new RRC connection after completion of the operation; and
switching, using the PHY block of the first radio, the first flag to a second value in the storage circuitry responsive to the indication indicating that the radio has not established the new RRC connection after completion of the operation.

7. The method of claim 1, further comprising:
changing, using the PHY block of the first radio, a second status flag in the storage circuitry after the RRC release, the second status flag being associated with a suspension of signal transmission by the first radio.

8. The method of claim 7, further comprising:
adjusting, using one or more processors, the first RFE budget or the second RFE budget based on the first status flag and the second status flag.

9. The method of claim 7, wherein the first status flag comprises a first single-bit identifier, the second status flag comprises a second single-bit identifier, the first single-bit identifier has a first value while the first radio transmits the first radio-frequency signals and during the operation, the first single-bit identifier has a second value while the first radio is off, the second single-bit identifier has a third value while the first radio transmits the first radio-frequency signals, and the second single-bit identifier has, during the operation, a fourth value that is different from the third value.

10. The method of claim 9, further comprising:
stopping, using the one or more processors, transmission of the first RFE budget to the first radio for a predetermined time period in response to the first single-bit identifier having the first value and the second single-bit identifier having the fourth value, wherein the storage circuitry comprises an always active memory region (AAMR), the first flag comprises a CellON flag, the second flag comprises a TxSuspend flag, and the predetermined time period comprises an RRC connection re-establishment timer.

11. The method of claim 9, further comprising:
increasing, using the one or more processors, the second RFE budget in response to the first single-bit identifier having the first value and the second single-bit identifier having the fourth value.

12. Wireless circuitry comprising:
a first radio configured to transmit first radio-frequency signals according to a first radio-frequency exposure (RFE) budget;
a second radio configured to transmit second radio-frequency signals according to a second RFE budget;
storage circuitry that stores a status flag indicative of whether the first radio has suspended radio-frequency transmission; and
one or more processors communicatively coupled to the first radio, the second radio, and the storage circuitry, wherein the one or more processors are configured to
periodically transmit the first RFE budget to the first radio and the second RFE budget to the second radio, and
update the second RFE budget in response to the status flag having a first value indicative of the first radio having suspended radio-frequency transmission.

13. The wireless circuitry of claim 12, the one or more processors being further configured to stop, for a predetermined time period, transmission of the second RFE budget to the first radio in response to the status flag having the first value.

14. The wireless circuitry of claim 12, wherein the storage circuitry comprises an always accessible memory region (AAMR).

15. The wireless circuitry of claim 12, wherein a physical layer (PHY) of the first radio is configured to change the status flag from a second value to the first value in response to a medium access control (MAC) layer of the first radio indicating that the first radio has performed an operation that involves a radio resource control (RRC) release, the operation comprising an inter-radio-access technology redirection, a mobility operation, a re-establishment operation, or an out-of-service operation.
